# EUROPEAN PATENT APPLICATION

(11) **EP 4 799 988 A1**
(43) Date of publication of application: **02.09.2026**
(21) Application number: 25160801.4
(22) Date of filing: 28.02.2025
(51) Int. Cl.: C03C 27/00, C03C 27/10, E06B 3/66, E06B 3/663

(54) **METHOD FOR MANUFACTURING GLASS PANEL UNIT, GLASS PANEL UNIT ASSEMBLY, AND GLASS PANEL UNIT**

(71) Applicant: Panasonic Housing Solutions Co., Ltd., Kadoma-shi, Osaka 571-8686 (JP)
(72) Inventor: ISHIBASHI, Tasuku, Osaka, 571-0057 (JP); URIU, Eiichi, Osaka, 571-0057 (JP); KOSUGI, Naoki, Osaka, 571-0057 (JP); ABE, Hiroyuki, Osaka, 571-0057 (JP); NONAKA, Masataka, Osaka, 571-0057 (JP); SHIMIZU, Takeshi, Osaka, 571-0057 (JP); HASEGAWA, Kazuya, Osaka, 571-0057 (JP); HASEGAWA, Kenji, Osaka, 571-0057 (JP); OFUJI, Masaaki, Osaka, 571-0057 (JP); OTAKE, Shohei, Osaka, 571-0057 (JP); JEANFILS, Julien, 1348 Louvain-La-Neuve (BE)
(74) Representative: Müller-Boré & Partner Patentanwälte PartG mbB

(57) **Abstract**

An object of the present disclosure is to provide a method for manufacturing a glass panel unit, a glass panel unit assembly, and a glass panel unit, all of which are designed to make pillars much less easily collapsable. A method for manufacturing a glass panel unit 10 includes a sealant placing step, a pillar placing step, a counter arrangement step, a bonding step, an evacuating step, and a sealing step. The pillar placing step is the step of placing a plurality of pillars 70 on either a first glass pane 20 or a second glass pane 30 at a pitch equal to or less than 30 mm. The plurality of pillars 70 have been cut out of a sheet. The sheet is a stack of a plurality of resin films and has an elongation equal to or greater than 35% and a tensile strength equal to or greater than 431 MPa. The bonding step is the step of melting a sealant at a process temperature equal to or higher than 260°C and equal to or lower than 475°C to create an internal space 500 surrounded with the first glass pane 20, the second glass pane 30, and the sealant. The sealing step is the step of sealing the internal space 500 while maintaining an evacuated state to form a hermetically sealed evacuated space 50.

## Description

### Technical Field

The present disclosure relates to a method for manufacturing a glass panel unit, a glass panel unit assembly, and a glass panel unit.

### Background Art

WO 2016/084382 A1 discloses a glass panel unit. This glass panel unit includes: a first glass panel; a second glass panel; a seal applied in a frame shape to hermetically bond the first glass panel and the second glass panel; a vacuum space surrounded with these members; and spacers placed between the first and second glass panels. Each of the spacers is a stack of two or more films including at least one resin film. The resin film is, for example, a polyimide film. The two or more films are bonded with an adhesive made from polyamide acid, for example.

However, the glass panel unit described above does not take an elongation, a tensile strength, and a process temperature of the resin film into consideration sufficiently. Therefore, the spacers will easily collapse when their pitch is simply widened, for example, thus still leaving room for improvement.

The problem to be overcome by the present disclosure is to provide a method for manufacturing a glass panel unit, a glass panel unit assembly, and a glass panel unit, all of which are designed to make pillars much less easily collapsable.

### Summary of Invention

A method for manufacturing a glass panel unit according to an aspect of the present disclosure includes a sealant placing step, a pillar placing step, a counter arrangement step, a bonding step, an evacuating step, and a sealing step. The sealant placing step is the step of placing a sealant on either a first glass pane or a second glass pane. The pillar placing step is the step of placing a plurality of pillars on either the first glass pane or the second glass pane at a pitch equal to or less than 30 mm. The plurality of pillars have been cut out of a sheet. The sheet is a stack of a plurality of resin films and has an elongation equal to or greater than 35% and a tensile strength equal to or greater than 431 MPa. The counter arrangement step is the step of arranging the first glass pane and the second glass pane to make the first glass pane and the second glass pane face each other. The bonding step is the step of melting the sealant at a process temperature equal to or higher than 260°C and equal to or lower than 475°C to create an internal space surrounded with the first glass pane, the second glass pane, and the sealant. The evacuating step is the step of exhausting a gas from the internal space to evacuate the internal space. The sealing step is the step of sealing the internal space while maintaining an evacuated state to form a hermetically sealed evacuated space.

A glass panel unit assembly according to another aspect of the present disclosure includes a first glass pane, a second glass pane, a sealant, and a plurality of pillars. The plurality of pillars that formed part of a sheet are placed on either the first glass pane or the second glass pane at a pitch equal to or less than 30 mm. The sheet is a stack of a plurality of resin films and has an elongation equal to or greater than 35% and a tensile strength equal to or greater than 431 MPa. The sealant, having a softening point equal to or higher than 260°C and equal to or lower than 475°C, is interposed in a frame shape between the first glass pane and the second glass pane. The first glass pane and the second glass pane are stacked via the sealant.

A glass panel unit according to still another aspect of the present disclosure includes a first glass pane, a second glass pane, a peripheral wall, and a plurality of pillars. The plurality of pillars that formed part of a sheet are placed on either the first glass pane or the second glass pane at a pitch equal to or less than 30 mm. The sheet is a stack of a plurality of resin films and has an elongation equal to or greater than 35% and a tensile strength equal to or greater than 431 MPa. The peripheral wall is provided in a frame shape between the first glass pane and the second glass pane. The peripheral wall contains, as a main component, glass having a softening point equal to or higher than 260°C and equal to or lower than 475°C and has air gaps inside. The peripheral wall is bonded to each of the first glass pane and the second glass pane.

### Brief Description of Drawings

FIG. 1A is a plan view illustrating an assembly as an intermediate product of a glass panel unit according to a first embodiment;
FIG. 1B is a cross-sectional view thereof taken along the plane A-A shown in FIG. 1A;
FIG. 2 is a plan view illustrating the glass panel unit according to the first embodiment;
FIG. 3 illustrates a step of a method for manufacturing the glass panel unit according to the first embodiment;
FIG. 4A is a side view illustrating a setting step forming part of a pillar placing step in a process for manufacturing the glass panel unit;
FIG. 4B is a side view illustrating a pillar mounting step forming another part of the pillar placing step in the process for manufacturing of the glass panel unit;
FIG. 4C is a side view illustrating a displacing step forming still another part of the pillar placing step in the process for manufacturing the glass panel unit;
FIG. 5 illustrates another step of the method for manufacturing the glass panel unit according to the first embodiment;
FIG. 6 illustrates still another step of the method for manufacturing the glass panel unit according to the first embodiment;
FIG. 7 illustrates yet another step of the method for manufacturing the glass panel unit according to the first embodiment;
FIG. 8 illustrates yet another step of the method for manufacturing the glass panel unit according to the first embodiment;
FIG. 9 illustrates yet another step of the method for manufacturing the glass panel unit according to the first embodiment;
FIG. 10 shows a relationship between the elongation (%) of a resin film and the diameter (µm) of pillars 70;
FIG. 11 is an enlarged plan view illustrating a main part of a glass panel unit according to a third embodiment;
FIG. 12A is an enlarged plan view illustrating a main part of a glass panel unit according to a variation of the third embodiment;
FIG. 12B is a cross-sectional view illustrating the main part of the glass panel unit according to the variation;
FIG. 13 shows a relationship between the compressive strength and the probability density in a situation where the process temperature is room temperature in a specific example;
FIG. 14 shows a relationship between the compressive strength and the probability density in a situation where the process temperature is 300°C in another specific example;
FIG. 15 shows a relationship between the compressive strength and the probability density in a situation where the process temperature is 465°C in still another specific example;
FIG. 16 is a plan view of a glass panel unit according to a comparative example;
FIG. 17 is a plan view of a glass panel unit according to Specific Example 1;
FIG. 18 is a plan view of a glass panel unit according to Specific Example 2;
FIG. 19 is a plan view of a glass panel unit according to Specific Example 3;
FIG. 20 is a plan view of a glass panel unit according to Specific Example 4;
FIG. 21 is a plan view of a glass panel unit according to Specific Example 5;
FIG. 22A is a plan view of an exemplary pillar cut out and separated from a sheet using a laser beam;
FIG. 22B is a side view of the pillar shown in FIG. 22A;
FIG. 23A is a perspective view of another exemplary pillar cut out and separated from a sheet using a laser beam;
FIG. 23B is a side view of the pillar shown in FIG. 23A;
FIG. 24A is a plan view of still another exemplary pillar cut out and separated from a sheet using a green laser beam; and
FIG. 24B is a plan view of yet another exemplary pillar cut out and separated from a sheet using a UV laser beam.

### Description of Embodiments

The present disclosure relates to a glass panel unit and its manufacturing method, a glass panel unit assembly, and a method for manufacturing a plurality of pillars. More particularly, the present disclosure relates to: a glass panel unit including a first glass pane, a second glass pane, a sealant, a plurality of pillars, and an evacuated space and its manufacturing method; a glass panel unit assembly; and a method for manufacturing a plurality of pillars.

### <First embodiment>

Next, an overview of a glass panel unit 10 and a method for manufacturing the glass panel unit 10 according to a first embodiment will be described.

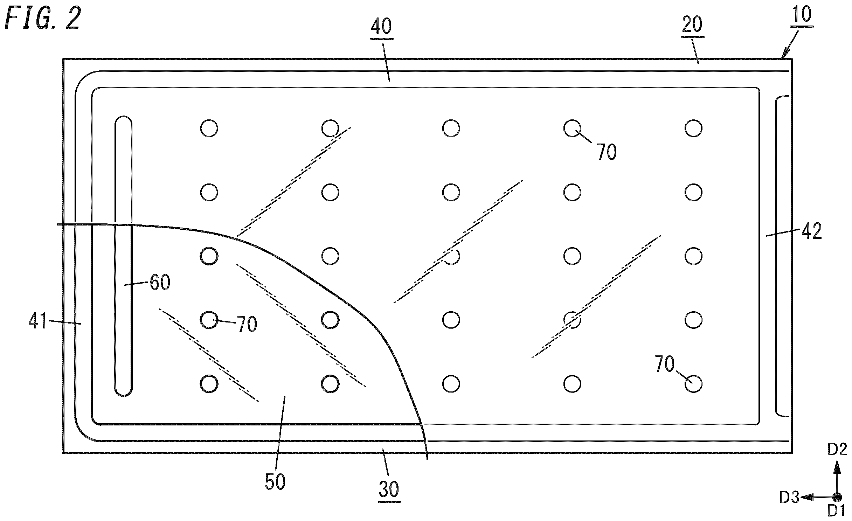

As shown in FIG. 2, the glass panel unit 10 includes a first glass pane 20, a second glass pane 30 facing the first glass pane 20, a frame member 40, an evacuated space 50, and a gas adsorbent 60. The frame member 40 hermetically bonds the first glass pane 20 and the second glass pane 30. The evacuated space 50 is surrounded with the first glass pane 20, the second glass pane 30, and the frame member 40. The gas adsorbent 60 is placed in the evacuated space 50. The gas adsorbent 60 contains a getter material.

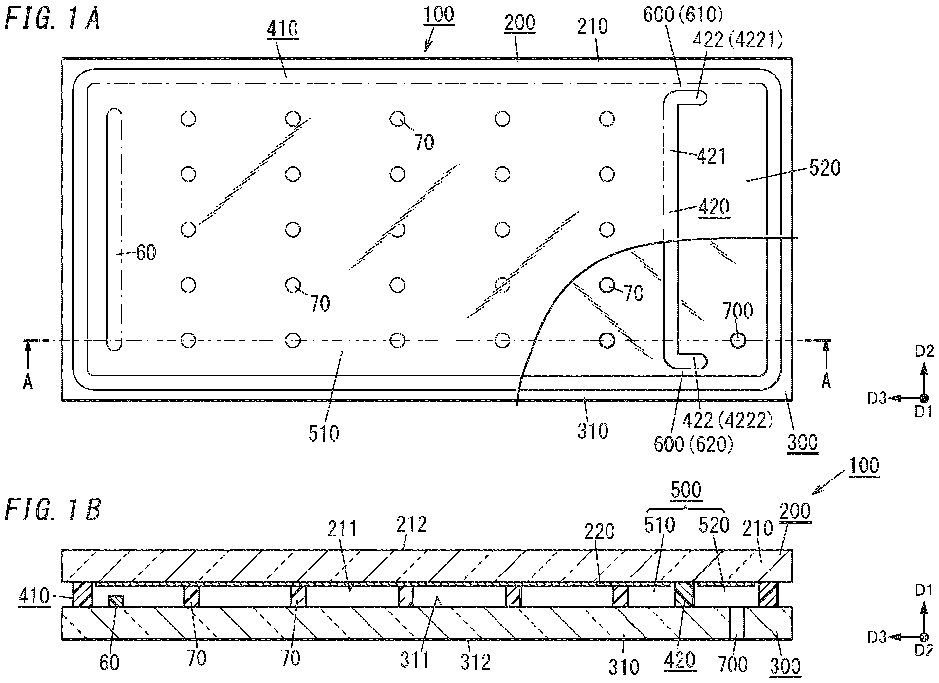

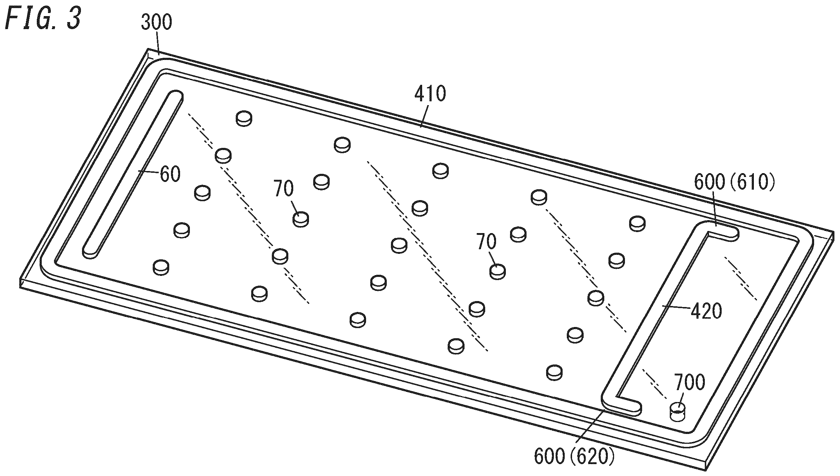

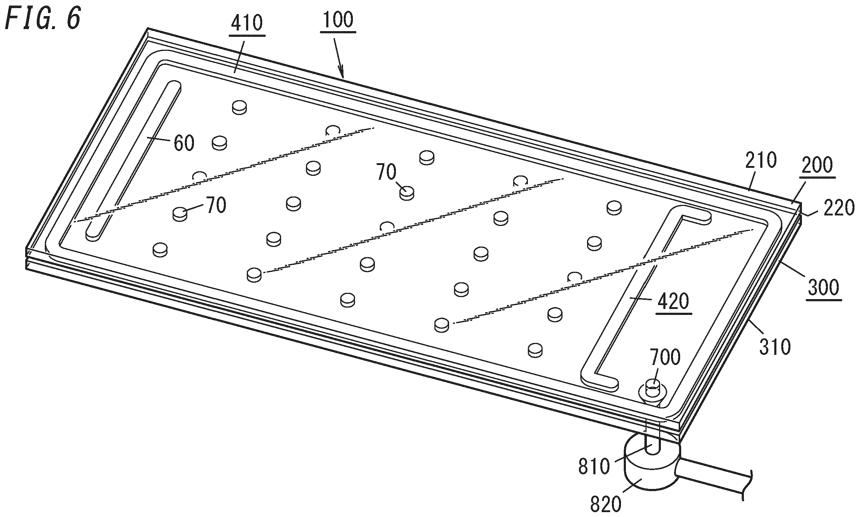

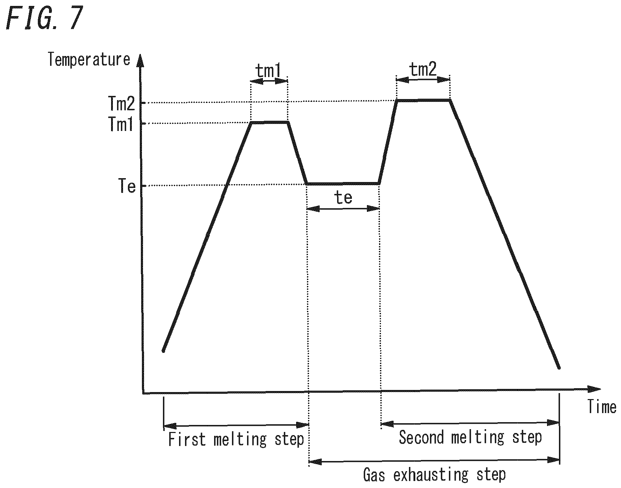

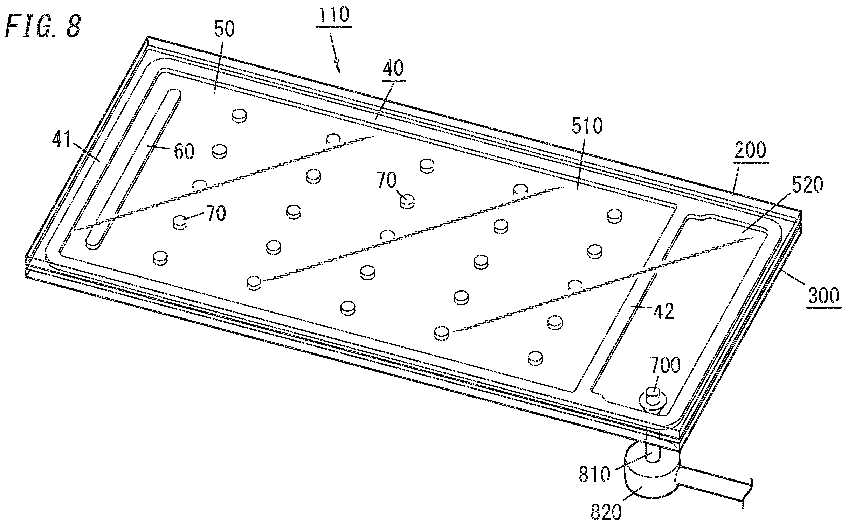

A method for manufacturing the glass panel unit 10 includes an assembling step (refer to FIGS. 3-6), a bonding step (a first melting step, refer to FIG. 7), a gas exhausting step (an evacuating step) (refer to FIGS. 6 and 7), a sealing step (refer to FIGS. 7 and 8), and a removing step. The assembling step is the step of preparing an assembly 100. The assembly 100 includes a first glass pane 200, a second glass pane 300, a peripheral wall 410 having a frame shape, an internal space 500, the gas adsorbent 60, and an exhaust port 700 (refer to FIGS. 1A and 1B). The second glass pane 300 faces the first glass pane 200. The peripheral wall 410 is interposed between the first glass pane 200 and the second glass pane 300. The internal space 500 is surrounded with the first glass pane 200, the second glass pane 300, and the peripheral wall 410. The gas adsorbent 60 is placed in the internal space 500 and contains the getter material. The exhaust port 700 allows the internal space 500 to communicate with the external environment. The bonding step is the step of melting the peripheral wall 410 to hermetically bond the first glass pane 200 and the second glass pane 300. The gas exhausting step is the step of exhausting a gas from the internal space 500 through the exhaust port 700 to evacuate the internal space 500 and thereby turn the internal space 500 into the evacuated space 50. The method for manufacturing the glass panel unit 10 (hereinafter sometimes referred to as a "manufacturing method") will now be described in detail with reference to FIGS 1-9. This manufacturing method is a method for manufacturing the glass panel unit 10 as shown in FIG. 2. Note that, in this embodiment, a direction D1 is parallel to the thickness of the first glass pane 200, a direction D2 is a direction intersecting at right angles with the direction D1, and a direction D3 is a direction intersecting at right angles with both the direction D1 and the direction D2. Also, the direction D1 may also be a first direction, the direction D2 may also be a second direction, and the direction D3 may also be a third direction.

The series of process steps through the sealing step are the steps of providing a work in progress 110 shown in FIG. 8. The work in progress 110 is formed out of the assembly 100 shown in FIGS. 1A and 1B. That is to say, the work in progress 110 is an intermediate product obtained while the glass panel unit 10 (refer to FIG. 2) is being manufactured. The assembly 100 is an intermediate product obtained while the work in progress 110 is being formed.

The assembling step is the step of preparing the assembly 100. As shown in FIGS. 1A and 1B, the assembly 100 includes the first glass pane 200, the second glass pane 300, the peripheral wall 410 (sealant) in a frame shape, and a partition 420 (sealant). That is to say, in the assembly 100, the sealant is applied in a frame shape between the first glass pane 200 and the second glass pane 300, and the first glass pane 200 and the second glass pane 300 are stacked one on top of the other via the sealant.

The assembly 100 further has an internal space 500 surrounded with the first and second glass panes 200, 300 and the peripheral wall 410. The assembly 100 further includes the gas adsorbent 60 and a plurality of pillars (spacers) 70 in the internal space 500. The assembly 100 further has the exhaust port 700.

The first glass pane (first glass substrate) 200 is a member that forms the basis of a first glass pane 20 to be described later and is made of the same material as the first glass pane 20. The second glass pane (second glass substrate) 300 is a member that forms the basis of a second glass pane 30 to be described later and is made of the same material as the second glass pane 30. The first and second glass panes 200, 300 have the same planar shape. In this embodiment, the first glass pane 200 has dimensions that are large enough to form at least one first glass pane 20 to be described later, and the second glass pane 300 has dimensions that are large enough to form at least one second glass pane 30 to be described later.

The first and second glass panes 200, 300 each have a polygonal flat plate shape (e.g., a rectangular shape in this embodiment).

The first glass pane 200 includes a body 210 and a low-emissivity film 220. The low-emissivity film 220 is provided in the internal space 500 and covers the body 210. The low-emissivity film 220 is in contact with the body 210. The low-emissivity film 220 is also called an "infrared reflective film" and has light-transmitting properties but reflects an infrared ray. Thus, the low-emissivity film 220 may improve the thermal insulation properties of the glass panel unit 10. The low-emissivity film 220 may be a thin metallic film, for example. The low-emissivity film 220 may contain silver, for example. The low-emissivity film 220 may be a Low-E film, for example.

The first glass pane 200 includes the body 210 as described above. The body 210 has a first surface 211 and a second surface 212. The first surface 211 is a flat surface and covered with the low-emissivity film 220. The second surface 212 is a flat surface parallel to the first surface 211 and is located opposite from the internal space 500 in the direction D1. The body 210 defines the main shape of the first glass pane 200, and therefore, has a rectangular flat plate shape. Examples of materials for the body 210 include soda lime glass, high strain point glass, chemically tempered glass, alkali-free glass, quartz glass, Neoceram, and thermally tempered glass. In this embodiment, the first glass pane 20 (first glass pane 200) is made of soda lime glass.

The second glass pane 300 includes a body 310. The body 310 has a first surface 311 and a second surface 312. The first surface 311 is a flat surface facing the low-emissivity film 220. The second surface 312 is a flat surface parallel to the first surface 311 and is located opposite from the internal space 500 in the direction D1. The body 310 defines the main shape of the second glass pane 300, and therefore, has a rectangular flat plate shape. The body 310 has the same shape as the body 210. In this embodiment, the second glass pane 300 consists of the body 310 alone. Optionally, the second glass pane 300 may include not only the body 310 but also a low-emissivity film corresponding to the low-emissivity film 220. If the second glass pane 300 includes a low-emissivity film, then the low-emissivity film covers, and is in contact with, the body 310 in the internal space 500. Examples of materials for the body 310 include soda lime glass, high strain point glass, chemically tempered glass, alkali-free glass, quartz glass, Neoceram, and thermally tempered glass. In this embodiment, the second glass pane 30 (second glass pane 300) is made of soda lime glass.

The peripheral wall 410 contains a first sealant (i.e., a first hot glue). The peripheral wall 410 is interposed between the first glass pane 200 and the second glass pane 300. The peripheral wall 410 has a frame shape as shown in FIG. 1A. Particularly, the peripheral wall 410 has a rectangular frame shape. The peripheral wall 410 is formed along the respective outer peripheries of the first and second glass panes 200, 300. Thus, in the assembly 100, the internal space 500 is created to be surrounded with the peripheral wall 410, the first glass pane 200, and the second glass pane 300.

The first hot glue may include a glass frit, for example. The glass frit may be a low-melting glass frit, for example. Examples of the low-melting glass frits include a bismuth-based glass frit, a lead-based glass frit, and a vanadium-based glass frit. In this embodiment, the first hot glue is configured as a vanadium-based glass frit. The first hot glue does not have to be a glass frit but may also be a low-melting metal or a hot-melt adhesive, for example. Optionally, the first hot glue may further contain either an organic binder or an organic solvent or both an organic binder and an organic solvent. In that case, even if a gas derived from the organic binder and/or the organic solvent is released into the evacuated space 50 after the sealing step (second melting step), the gas will be adsorbed into the gas adsorbent 60, thus reducing the chances of the gas remaining in the evacuated space 50.

The organic binder may include a resin, for example. Examples of the resin include poly(isobutyl methacrylate), ethyl cellulose, aliphatic polycarbonate, acrylic resin, and butyral resin. The organic binder does not have to be one of these resins but may include any component as well. In any case, the resin constituting the organic binder is preferably a resin which has a low molecular weight, and which may be easily decomposed.

Examples of the organic solvent include esters such as butyl carbitol acetate and ethyl carbitol acetate. However, the organic solvent does not have to be one of these components but may also include at least one solvent selected from the group consisting of a solvent such as a terpene-based solvent for use in general screen printing and a solvent for use in dispense application.

If the peripheral wall 410 further contains a resin, even a gas derived from the resin and released into the internal space 500 after the assembling step will also be exhausted in the gas exhausting step. In addition, even if the gas derived from the resin still remains as residual gas in the evacuated space 50 after the gas exhausting step, the residual gas may also be adsorbed into the gas adsorbent 60.

The partition 420 is placed in the internal space 500. The partition 420 partitions the internal space 500 into a first space 510 and a second space (ventilation space) 520. Thus, the first space 510 is a space from which a gas is exhausted in the gas exhausting step. The second space 520 is a space for use to exhaust the gas from the first space 510. The partition 420 is provided closer to a first end (i.e., the right end in FIG. 1A) along the length (i.e., the rightward/leftward direction in FIG. 1A) of the second glass pane 300 than to the center of the second glass pane 300 such that the first space 510 has a larger area than the second space 520. The partition 420 is provided in the internal space 500 along the width (i.e., the upward/downward direction in FIG. 1A) of the second glass pane 300. Nevertheless, neither longitudinal end of the partition 420 is in contact with the peripheral wall 410. In this embodiment, the width of the second glass pane 300 is parallel to the direction D2 and the length of the second glass pane 300 is parallel to the direction D3.

The partition 420 includes a body portion (partition body portion) 421 that forms its body and blocking portions 422. The blocking portions 422 include a first blocking portion 4221 and a second blocking portion 4222. The body portion 421 extends linearly in the direction D2. The direction D2 may be aligned with, for example, the width of the second glass pane 300. Also, in the direction D2, both ends of the body portion 421 are out of contact with the peripheral wall 410. The first blocking portion 4221 is formed to extend from one of the two ends of the body portion 421 toward the second space 520 and the second blocking portion 4222 is formed to extend from the other end of the body portion 421 toward the second space 520. The one end of the body portion 421 may be a first end and the other end thereof may be a second end.

The partition 420 contains a second sealant (second hot glue). The second hot glue may be a glass frit, for example. The glass frit may be a low-melting glass frit, for example. Examples of the low-melting glass frits include a bismuth-based glass frit, a lead-based glass frit, and a vanadium-based glass frit. In this embodiment, the second hot glue is configured as a vanadium-based glass frit. The second hot glue does not have to be a glass frit but may also be a low-melting metal or a hot-melt adhesive, for example. In this embodiment, the same type of glue is used as the first and second hot glues. That is to say, the first and second sealants are the same material.

The sealant according to this embodiment (the first sealant and the second sealant) has a melting point equal to or higher than 260°C and equal to or lower than 475°C.

Air passages 600 allow the first space 510 and the second space 520 to communicate with each other in the internal space 500 as shown in FIG. 1A. The air passages 600 include a first air passage 610 and a second air passage 620. The first air passage 610 is a gap between the first end (i.e., the upper end in FIG. 1A) of the partition 420 and the peripheral wall 410. The second air passage 620 is a gap between the second end (i.e., the lower end in FIG. 1A) of the partition 420 and the peripheral wall 410.

The exhaust port 700 is a hole that allows the second space 520 to communicate with the external environment. The exhaust port 700 is used to exhaust a gas from the first space 510 through the second space 520 and the air passages 600 (namely, the first air passage 610 and the second air passage 620). Thus, the air passages 600, the second space 520, and the exhaust port 700 together form an exhaust path for exhausting the gas from the first space 510. The exhaust port 700 is provided through the second glass pane 300 to allow the second space 520 to communicate with the external environment. Specifically, the exhaust port 700 is provided at a corner portion of the second glass pane 300.

The gas adsorbent 60 and the plurality of pillars 70 are arranged in the first space 510. In particular, the gas adsorbent 60 is formed along the width of the second glass pane 300 so as to be adjacent to a second end along the length (i.e., the left end in FIG. 1A) of the second glass pane 300. That is to say, the gas adsorbent 60 is placed at an end of the first space 510 (evacuated space 50). This makes the gas adsorbent 60 less conspicuous. In addition, the gas adsorbent 60 is located distant from the partition 420 and the air passage 600. This reduces the chances of the gas adsorbent 60 interfering with exhausting the gas from the first space 510.

The assembling step is the step of forming the first glass pane 200, the second glass pane 300, the peripheral wall 410, the partition 420, the internal space 500, the air passages 600, the exhaust port 700, the gas adsorbent 60, and the plurality of pillars 70 to obtain the assembly 100. The assembling step includes the following first to sixth steps. Optionally, the order in which the second to fifth steps are performed may be changed as appropriate.

The first step is the step of forming the first glass pane 200 and the second glass pane 300 (i.e., a substrate forming step). For example, the first step includes making the first glass pane 200 and the second glass pane 300. If necessary, the first step may further include cleaning the first glass pane 200 and the second glass pane 300.

The second step is the step of forming the exhaust port 700 (i.e., exhaust port forming step). The second step includes providing the exhaust port 700 through the second glass pane 300. If necessary, the second step includes cleaning the second glass pane 300.

The third step is the step of placing, on either the first glass pane 200 or the second glass pane 300, a plurality of pillars 70 manufactured by a predetermined pillar manufacturing method (i.e., pillar placing step) (refer to FIG. 3). In this embodiment, the pillar placing step includes a punching step. In the punching step, the pillars 70 are formed by punching a sheet 92 using a punching press. The punching step according to this embodiment forms part of a pillar forming step, including forming the pillars 70 from the sheet 92 (as will be described later), not just forming part of the pillar placing step.

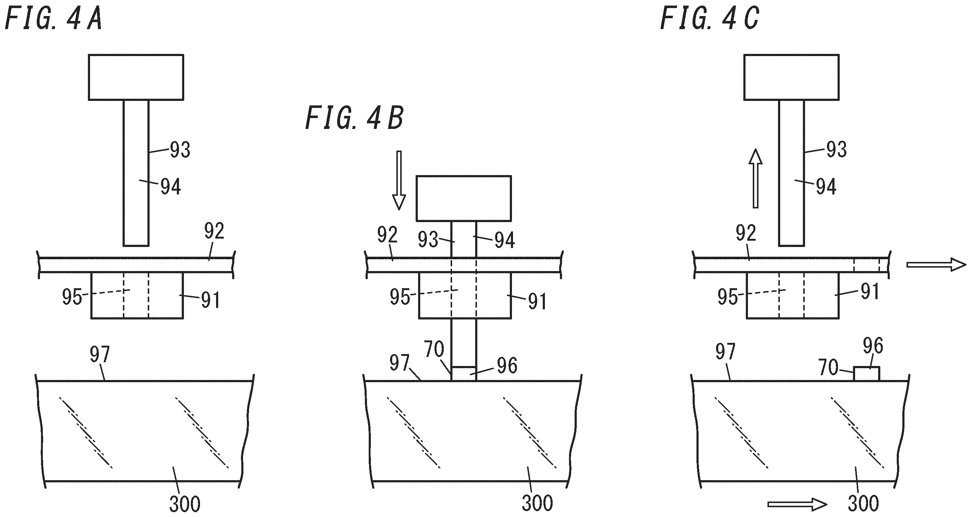

The pillar placing step will now be described with reference to FIGS. 4A-4C. This pillar placing step includes a setting step, a pillar mounting step, and a displacing step, which are performed in this order.

In the setting step shown in FIG. 4A, the second glass pane 300, a punching die 91, the sheet 92, and a punching press 93 are set in place to be arranged in this order from down to up. The sheet 92 is laid on top of the upper surface of the punching die 91. A punch 94 that forms part of the punching press 93 is positioned, with the sheet 92 interposed, right over a through hole 95 of the punching die 91.

In the pillar mounting step shown in the FIG. 4B, the punching press 93 is brought straight down. Bringing the punching press 93 downward makes the punch 94 having the shape of a column punch out a portion 96 of the sheet 92 downward through the through hole 95 of the punching die 91 (as indicated by the open arrow shown in FIG. 4B).

The portion 96 of the sheet 92 punched out by the punch 94 is pressed, while being still in contact with the tip surface of the punch 94, against a surface 97 of the second glass pane 300.

The portion 96 of the sheet 92 is temporarily fixed onto the surface 97 by being pressed by the tip surface of the punch 94 against the surface 97 of the second glass pane 300 under a predetermined pressure for a predetermined time. The temporally fixed portion 96 of the sheet 92 will be a pillar 70 on the surface 97.

The displacing step shown in the FIG. 4C includes moving the second glass pane 300 and the sheet 92 horizontally after the punching press 93 has been brought upward as indicated by the open arrow. In this embodiment, the second glass pane 300 and the sheet 92 are moved in the same direction. Alternatively, the second glass pane 300 and the sheet 92 may also be moved in two different directions. These are the details of the third step according to this embodiment. However, this is only an example, and the third step should not be construed as being limited to these details

In this embodiment, the pillars 70 are placed at a pitch equal to or less than 30 mm. The pillars 70 are placed at intersections of a grid (i.e., at grid points) made up of a plurality of squares of the same shape, each side of which has a length equal to or less than 30 mm, for example. In this embodiment, the plurality of pillars 70 are placed regularly. However, this should not be construed as limiting. Alternatively, some of the pillars 70 do not have to be placed regularly.

As used herein, the "pitch" of the pillars 70 refers to a center-to-center distance between two adjacent pillars 70, 70. Also, the expression "the pitch of the pillars 70 is equal to or less than 30 mm" means that the center-to-center distance between one pillar 70 and another pillar 70 located closest to the former pillar 70 is equal to or less than 30 mm.

Nevertheless, the expression "the pitch of the pillars 70 is equal to or less than 30 mm" may also refer to a situation where the center-to-center distance between any one of the pillars 70 and another pillar 70 located closest to the former pillar 70 is greater than 30 mm. That is to say, not every pillar 70 does not have to have a center-to-center distance equal to or less than 30 mm from a pillar 70 located closest to the former pillar 70. Note that the average center-to-center distance between every pillar 70 and another pillar 70 located closest to the former pillar 70 is equal to or less than 30 mm.

In the displacing step, the punching press 93 is brought upward and then next punching is performed by the punching press 93. Therefore, the punching press 93 needs to move horizontally by the pitch of the pillars 70.

Note that the dimensions, the number, and the arrangement pattern of the pillars 70 may be selected appropriately. Each pillar 70 has the shape of a column, of which the height is approximately equal to the predetermined interval. The pillars 70 may have, for example, a diameter of 0.44 to 0.52 mm and a height of 114 µm. Alternatively, each pillar 70 may also have any other desired shape such as a prism or a sphere. A method for manufacturing the pillars 70 will be described later. Note that the thickness (i.e., height) of the pillars 70 will be around 80 to 100 µm in the glass panel unit 10 as a finished product, because the pillars 70 are compressed between the first glass pane 20 and the second glass pane 30. Also, the diameter of the pillars 70 will be 0.52 to 0.58 mm, because the pillars 70 are expanded laterally.

The fourth step is the step of forming the gas adsorbent 60 (gas adsorbent forming step) (refer to FIG. 3). The fourth step includes applying getter paste onto the second glass pane 300 using, for example, a dispenser. The getter paste contains, for example, a zeolite and a solvent (such as water or an organic solvent). The getter paste that has applied is dried to vaporize the solvent and thereby apply a powder of the zeolite on the second glass pane 300. In this manner, the gas adsorbent 60 is formed. That is to say, the next fifth step includes a drying step of drying the getter paste. Drying the getter paste allows the getter material to recover its gas adsorptivity. In addition, applying the getter paste allows the size of the gas adsorbent 60 to be reduced. This allows the gas adsorbent 60 to be placed even in a narrow first space 510.

The fifth step is the step of placing the sealant (peripheral wall 410) on the first glass pane 200 or the second glass pane 300 (sealant placing step). Specifically, the fifth step includes arranging the peripheral wall 410 and the partition 420 (refer to FIG. 3). The fifth step includes forming the peripheral wall 410 by applying, using a dispenser, for example, a first sealant onto the second glass pane 300 and then drying the first sealant. The fifth step also includes forming the partition 420 by applying, using a dispenser, for example, a second sealant onto the second glass pane 300 and then drying the second sealant.

By performing these first to fifth steps, the second glass pane 300 such as the one shown in FIG. 3 is obtained. On this second glass pane 300, the peripheral wall 410, the partition 420, the air passages 600, the exhaust port 700, the gas adsorbent 60, and the plurality of pillars 70 have been formed.

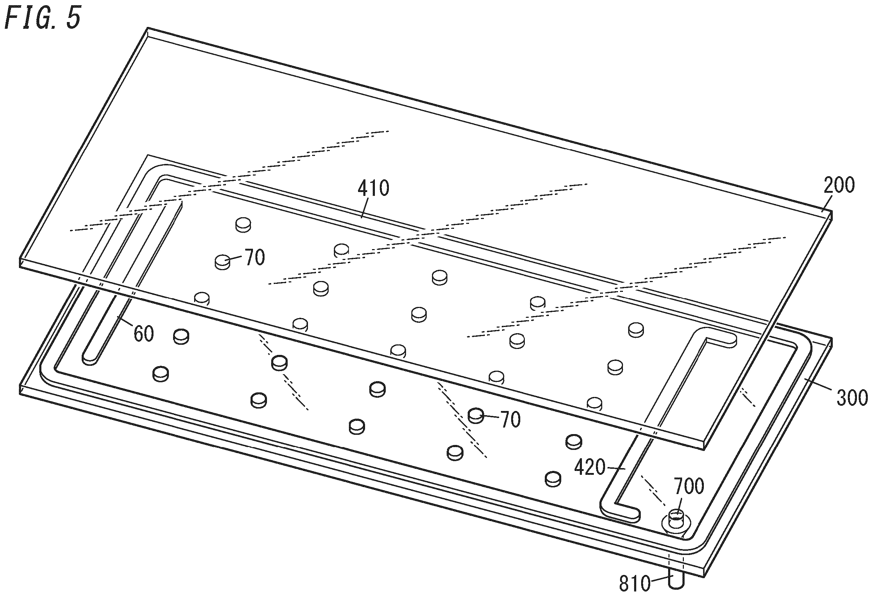

The sixth step is the step of arranging the first glass pane 200 and the second glass pane 300 such that the first glass pane 200 and the second glass pane 300 face each other (counter arrangement step). In the sixth step, the first glass pane 200 and the second glass pane 300 are arranged to be parallel to each other and face each other as shown in FIG. 5.

The assembly 100 shown in FIG. 6 is obtained by performing this assembling step. After the assembling step has been performed, a first melting step (bonding step), a gas exhausting step, and a second melting step (sealing step) are performed as shown in FIG. 7.

The first melting step is the step of melting the sealant to form the internal space 500 surrounded with the first glass pane 200, the second glass pane 300, and the sealant (peripheral wall 410) except an exhaust path through which the gas may be exhausted to the external environment. Specifically, the first melting step includes melting the sealant (peripheral wall 410) once at a process temperature equal to or higher than 260°C and equal to or lower than 475°C to hermetically bond the first glass pane 200 and the second glass pane 300 together with the peripheral wall 410. In this case, the process temperature is a temperature higher than the softening point of the sealant and is preferably a temperature higher than the softening point of the sealant by 10°C, and more preferably a temperature higher than the softening point of the sealant by 20°C. The first glass pane 200 and the second glass pane 300 are loaded into a melting furnace and heated at a first melting temperature Tm1 for a predetermined time (first melting time) tm1 (refer to FIG. 7). In this embodiment, the first sealant and the second sealant are the same material as described above, and therefore, the softening point of the first sealant (first softening point) is the same as the softening point of the second sealant (second softening point). Thus, the first melting temperature Tm1 is set at a temperature equal to or higher than the first and second softening points. Even if the first melting temperature Tm1 is equal to or higher than the first and second softening points, the partition 420 does not close the air passages 600 in the first melting step. That is to say, in the first melting step, the air passages 600 are still available. In the first melting step, if the first and second softening points are 265°C, the first melting temperature Tm1 may be set at 290°C, for example. The first melting time tm1 may be 15 minutes, for example.

In this embodiment, the implementation in which the first softening point is the same as the second softening point covers not only an implementation in which the first softening point is exactly the same as the second softening point but also an implementation in which the first softening point is approximately equal to the second softening point.

Heating the peripheral wall 410 at the first melting temperature Tm1 allows the peripheral wall 410 to be softened while reducing the deformation of the partition 420. This makes it easier to hermetically bond the first glass pane 200 and the second glass pane 300 with the peripheral wall 410.

The gas exhausting step is the step of exhausting a gas from the first space 510 through the air passages 600, the second space 520, and the exhaust port 700 to turn the first space 510 into an evacuated space 50. The gas may be exhausted using a vacuum pump, for example. The vacuum pump may be connected to the assembly 100 via an exhaust pipe 810 and a sealing head 820 as shown in FIG. 6. The exhaust pipe 810 may be bonded to the second glass pane 300 such that the inside of the exhaust pipe 810 and the exhaust port 700 communicate with each other, for example. Then, the sealing head 820 is attached to the exhaust pipe 810, thereby connecting a suction port of the vacuum pump to the exhaust port 700. The first melting step, the gas exhausting step, and the second melting step are performed with the assembly 100 still loaded in the melting furnace. Therefore, the exhaust pipe 810 is bonded to the second glass pane 300 at least before the first melting step.

The gas exhausting step includes exhausting a gas from the first space 510 through the air passages 600, the second space 520, and the exhaust port 700 at a temperature equal to or higher than an exhaust temperature Te for a predetermined time (exhaust time) te or more before the second melting step is started (refer to FIG. 7). The exhaust temperature Te is set at a temperature lower than the second softening point (e.g., 265°C) of the second sealant. The exhaust temperature Te may be 250°C, for example. This prevents the partition 420 from being deformed even in this gas exhausting step. During this gas exhausting step, at least water in the gas adsorbent 60 is vaporized and released into the first space 510. Then, the water is drained from the first space 510 through the air passages 600, the second space 520, and the exhaust port 700. Thus, draining the water released from the gas adsorbent 60 allows the getter material to further recover its gas adsorptivity. The exhaust time te is set to create an evacuated space 50 with any desired degree of vacuum (e.g., a degree of vacuum of 0.1 Pa or less). The exhaust time te may be set at 30 minutes, for example. Also, at this time, the activation temperature of the gas adsorbent 60 is the exhaust temperature Te.

The second melting step (sealing step) is the step of sealing the internal space 500 while maintaining the evacuated state to form a hermetically sealed evacuated space 50. Specifically, the second melting step includes closing at least the air passages 600 by deforming the partition 420 to form a boundary wall 42 and thereby obtain a work in progress 110 as shown in FIG. 8. That is to say, the second melting step includes closing the air passages 600 by deforming the partition 420. **In** other words, the first space 510 is closed by the partition 420 deformed so that the first space 510 and the second space 520 are separated from each other. **In** this manner, a frame member 40 surrounding the evacuated space 50 is formed (refer to FIG. 8). **In** this embodiment, the partition 420 is deformed such that both longitudinal ends of the partition 420 (namely, the first and second blocking portions 4221, 4222) come into contact with, and are integrated with, the peripheral wall 410. As a result, a boundary wall 42 is formed which hermetically separates the internal space 500 into the first space 510 (evacuated space 50) and the second space 520. More specifically, melting the partition 420 once at a predetermined temperature (second melting temperature) Tm2 equal to or higher than the second softening point of the second sealant causes the partition 420 to be deformed. Specifically, the first glass pane 200 and the second glass pane 300 are heated in the melting furnace at the second melting temperature Tm2 for a predetermined time (second melting time) tm2 (refer to FIG. 7). The second melting temperature Tm2 and the second melting time tm2 are set such that the partition 420 is softened to close the air passages 600. The lower limit of the second melting temperature Tm2 is the second softening point (e.g., 265°C). The second melting temperature Tm2 may be set at 300°C, for example. Also, the second melting time tm2 may be 30 minutes, for example. **In** this embodiment, the sealing step is the second melting step. **In** short, the sealing step is the step of spatially separating the evacuated space 50 from the other space. The space other than the evacuated space 50 corresponds to the second space 520 in this embodiment.

**In** this embodiment, the gas exhausting step is started after the first melting step and ends when the second melting step ends as shown in FIG. 7. Thus, during the second melting step, the gas is exhausted from the first space 510 through the air passages 600, the second space 520, and the exhaust port 700. This creates a pressure difference between the inside and outside of the assembly 100. This pressure difference causes the first and second glass panes 200, 300 to approach each other. Thus, the second melting step includes forming the boundary wall 42 that closes the air passages 600 by deforming the partition 420 at the second melting temperature Tm2 while exhausting a gas from the first space 510 through the air passages 600, the second space 520, and the exhaust port 700.

Also, in the second melting step shown in FIG. 7, after the second melting time tm2 has passed, the temperature inside the melting furnace is lowered to room temperature at a constant rate. Then, the sealing head 820 is removed to finish the second melting step and the gas exhausting step.

By finishing the second melting step and the gas exhausting step, the work in progress 110 shown in FIG. 8 is obtained. As shown in FIG. 8, the work in progress 110 includes the first glass pane 200, the second glass pane 300, the peripheral wall 41, and the boundary wall 42. In addition, the work in progress 110 also has the evacuated space 50 and the second space 520. The work in progress 110 further includes, in the evacuated space 50, the gas adsorbent 60 and the plurality of pillars 70. The work in progress 110 further has the exhaust port 700.

The peripheral wall 41 and the boundary wall 42 are formed after the peripheral wall 410 made of the first sealant (first hot glue) including a glass frit and the partition 420 made of the first sealant (that is the second sealant [second hot glue]) including a glass frit have once been melted and then solidified. Therefore, the peripheral wall 41 and the boundary wall 42 contain glass having a softening point equal to or higher than 260°C and equal to or lower than 475°C as a main component thereof. The peripheral wall 41 and the boundary wall 42 have microscopic air gaps having a size of about 0.1 µm to a few hundred µm. These air gaps are residual gaps, where no glass is left and which are produced between glass particles when the glass frit as a constituent material for the sealant (i.e., the first sealant and the second sealant) is melted to combine the glass particles together.

The peripheral wall 41 and the boundary wall 42 are both bonded to the first glass pane 200 and the second glass pane 300.

The first and second glass panes 200, 300 each have a rectangular flat plate shape. The first and second glass panes 200, 300 have the same planar shape.

The boundary wall 42 (spatially) separates the evacuated space 50 from the second space 520. In other words, the second space 520 of the work in progress 110 (spatially) communicates with the external environment through the exhaust port 700, and therefore, the boundary wall 42 separates the evacuated space 50 from the external environment. The boundary wall 42 and the peripheral wall 410 together form the frame member 40 surrounding the evacuated space 50. The frame member 40 not only surrounds the evacuated space 50 entirely but also hermetically bonds the first and second glass panes 200, 300 together.

The gas adsorbent 60 is placed in the evacuated space 50. Specifically, the gas adsorbent 60 has an elongate flat-plate shape and is provided on the second glass pane 300. The gas adsorbent 60 is used to adsorb unnecessary gases (such as residual gases). The unnecessary gases may be, for example, the gas emitted from the hot glues (namely, the first and second hot glues) forming the frame member 40 when the hot glues are heated.

The plurality of pillars 70 are placed in the evacuated space 50. The plurality of pillars 70 is used to maintain a desired gap distance between the first and second glass panes 200, 300.

The evacuated space 50 is created by exhausting the gases from the first space 510 through the second space 520 and the exhaust port 700 as described above. In other words, the evacuated space 50 is the first space 510, of which the degree of vacuum is a predetermined value or less. The predetermined value may be 0.1 Pa, for example. The evacuated space 50 is perfectly closed hermetically by the first glass pane 200, the second glass pane 300, and the frame member 40, and therefore, is separated from the second space 520 and the exhaust port 700.

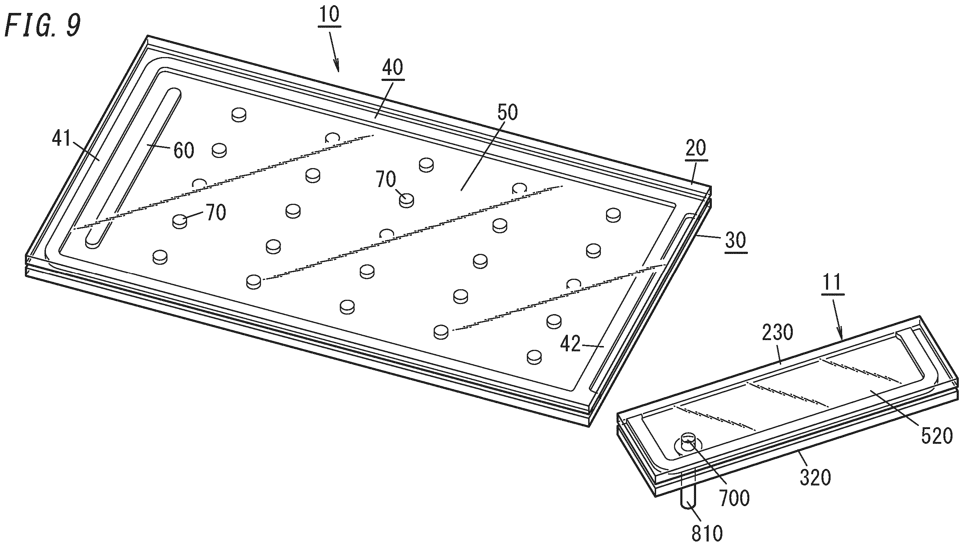

The removing step is performed after the second melting step and the gas exhausting step have been performed. The removing step is the step of removing a portion 11 having the second space 520 from the work in progress 110 to obtain the glass panel unit 10 as a part having the evacuated space 50 as shown in FIG. 9.

The glass panel unit 10 includes the first glass pane 20, the second glass pane 30, the boundary wall 42, and the pillars 70. The first glass pane 20 is a part, corresponding to the first space 510 (i.e., the evacuated space 50), of the first glass pane 200. The second glass pane 30 is a part, corresponding to the first space 510 (i.e., the evacuated space 50), of the second glass pane 300.

On the other hand, the unnecessary portion 11 includes a part 230, corresponding to the second space 520, of the first glass pane 200 and a part 320, corresponding to the second space 520, of the second glass pane 300. Note that the unnecessary portion 11 is preferably as small as possible, considering the manufacturing cost of the glass panel unit 10.

Specifically, in the removing step, the work in progress 110 unloaded from the melting furnace is cut off along the boundary wall 42 to be divided into a part (glass panel unit) 10 having the evacuated space 50 and a part (unnecessary portion) 11 having the second space 520. Note that the shape of the portion where the work in progress 110 is cut off (i.e., cutting line) is determined by the shape of the glass panel unit 10. Since the glass panel unit 10 has a rectangular shape, the cutting line has a linear shape aligned with the length of the boundary wall 42.

The glass panel unit 10 shown in FIG. 2 is obtained through the series of process steps from the assembling step through the removing step described above.

FIG. 2 illustrates a glass panel unit (i.e., a glass panel unit as a final product) 10 according to this embodiment. The glass panel unit 10 includes the first glass pane 20, the second glass pane 30, and the frame member 40. In addition, the glass panel unit 10 further has the evacuated space 50 surrounded with the first and second glass panes 20, 30 and the frame member 40. The glass panel unit 10 further includes, within the evacuated space 50, the gas adsorbent 60 and the plurality of pillars 70. In the glass panel unit 10, neither the first glass pane 20 nor the second glass pane 30 has the exhaust port 700.

The first and second glass panes 20, 30 may each have a rectangular flat plate shape. The first and second glass panes 20, 30 have the same planar shape.

The first glass pane 20 according to this embodiment is obtained by removing the unnecessary part 230 from the first glass pane 200 through the removing step. Thus, the first glass pane 20 has the same configuration as the first glass pane 200. That is to say, the first glass pane 20 includes a body that forms the main shape of the first glass pane 20 and the low-emissivity film 220. The body is covered with the low-emissivity film 220 in the evacuated space 50. The first glass pane 20 has a rectangular flat plate shape.

The second glass pane 30 according to this embodiment is obtained by removing the unnecessary part 320 from the second glass pane 300 through the removing step. Thus, the second glass pane 30 has the same configuration as the second glass pane 300. That is to say, the second glass pane 30 includes a body that forms the main shape of the second glass pane 30. In this embodiment, the second glass pane 30 consists of the body alone. Optionally, the second glass pane 30 may include not only the body but also a low-emissivity film corresponding to the low-emissivity film 220. If the second glass pane 30 includes a low-emissivity film, then the low-emissivity film covers, and is in contact with, the body of the second glass pane 30 in the evacuated space 50.

The frame member 40 is provided between the first glass pane 20 and the second glass pane 30 to hermetically bond the first glass pane 20 and the second glass pane 30 together. Thus, the evacuated space 50 is surrounded with the first glass pane 20, the second glass pane 30, and the frame member 40. The frame member 40 has a polygonal (e.g., quadrangular in this embodiment) frame shape corresponding to that of the first and second glass panes 20, 30. The frame member 40 is formed along the respective outer peripheries of the first and second glass panes 20, 30.

The plurality of pillars 70 are placed in the evacuated space 50. The plurality of pillars 70 is used to maintain a desired gap distance between the first and second glass panes 20, 30.

### <If tempered glass is used>

If tempered glass (e.g., chemically tempered glass or thermally tempered glass) is used as the first glass pane 200 and the second glass pane 300, the exhaust port 700 itself is sealed without using the partition 420 (i.e., sealant). That is to say, this is a process in which: the sealant is melted in the first melting step to create the internal space 500 surrounded with the first glass pane 20, the second glass pane 30, and the sealant (i.e., the peripheral wall 410); and then the internal space 500 is turned into the evacuated space 50 through the exhaust port 700. The partition 420 is not in use in that case, which allows for making one evacuated space because the first space 510 and the second space 520 are not separated. **In** that case, the pillars 70 are placed not only in the first space 510 as described above but also in the second space 520 as well.

### <Overview of method for manufacturing pillars>

Next, a method for manufacturing the pillars according to this embodiment will be described. A predetermined method for manufacturing the pillars includes respective steps of a method for manufacturing a sheet 92 and a pillar forming step of forming pillars out of the sheet 92 thus manufactured.

The pillar forming step is the step of forming pillars 70 by cutting off a sheet 92 obtained by the method for manufacturing the sheet 92. **In** this embodiment, the pillar forming step is performed in parallel with the pillar placing step (i.e., a third step). Next, the sheet 92 will be described.

### <Sheet>

The sheet 92 is a stack of a plurality of resin films to have an elongation equal to or greater than 35% and a tensile strength equal to or greater than 431 MPa.

The standard applied to a tensile test is JIS7127:1999. Also, the condition for the tensile test includes a tensile test speed of 50 mm/ min, a gauge length of 50 mm, a test piece length equal to or greater than 150 mm and equal to or less than 160 mm, and a test piece width of 10 mm. Furthermore, as for a tensile direction, if the material (film) has anisotropy, a direction in which the breaking elongation is maximized is adopted. Besides, the test piece should be made, and a gripper should be selected carefully enough to measure the original material properties without causing a fracture to the test piece from a scratch on the test piece or from the vicinity of the gripper of the test piece during the test.

The polyimide-based film for use in this embodiment is a polymer film including an imide group in its structure, such as polyimide, polyamide imide, polyester imide, and polyether imide.

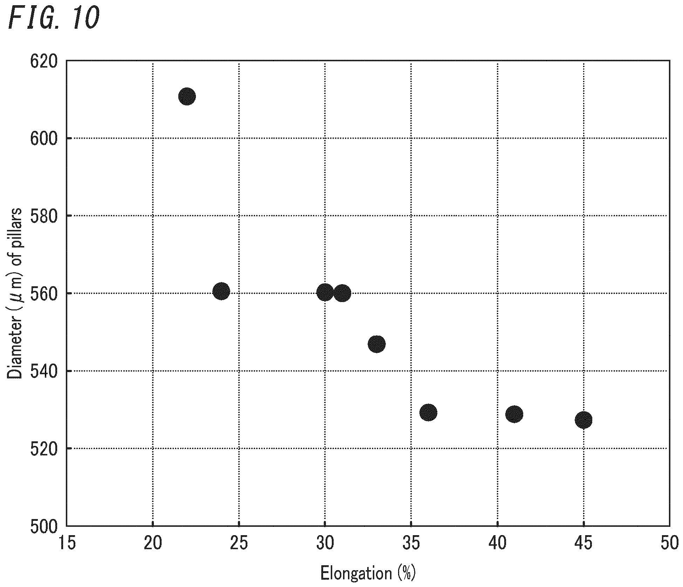

A relationship between the elongation (%) of the resin films and the diameter (µm) of the pillars 70 of the glass panel unit that has been sealed is shown in FIG. 10. As can be seen from FIG. 10, when the elongation of the resin films is greater than 35%, the diameter of the pillars 70 after the glass panel unit has been sealed tends to decrease (i.e., the pillars 70 tend to be not easily collapsable).

### <Second embodiment>

Next, an overview of a glass panel unit 10 and a method for manufacturing the glass panel unit 10 according to a second embodiment will be described. Note that the glass panel unit 10 and method for manufacturing the glass panel unit 10 according to the second embodiment are mostly the same as the glass panel unit 10 and method for manufacturing the glass panel unit 10 according to the first embodiment, and therefore, their common features will not be described all over again to avoid redundancies.

In the first embodiment, the pillars 70 are formed by performing the punching step of punching the sheet 92 using the punching press. On the other hand, according to the second embodiment, the pillars 70 are manufactured by performing a laser cutting step of cutting off the sheet 92 using a laser beam.

If the pillars 70 are formed by punching the sheet 92 using the punching press, the sheet 92 is easily subjected to local force while the sheet 92 is being cut off using the punching press 93. This often makes the feature size (e.g., diameter) of the pillars 70 non-uniform and also increases the chances of forming burrs, which is a problem with such a punching method. Thus, when the burrs are formed, stress is likely to be concentrated in regions surrounding the burrs, thus frequently causing a decrease in the mechanical strength of the pillars 70.

In contrast, forming the pillars 70 by cutting off the sheet 92 using a laser beam instead of using the punching press increases the chances of making the feature size of the pillars 70 uniform and reduces the chances of forming such burrs. Consequently, this significantly reduces the chances of causing a decrease in the mechanical strength of the pillars 70.

### <Third embodiment>

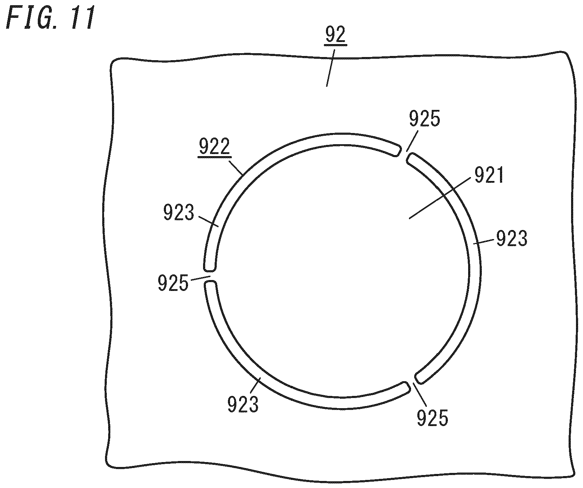

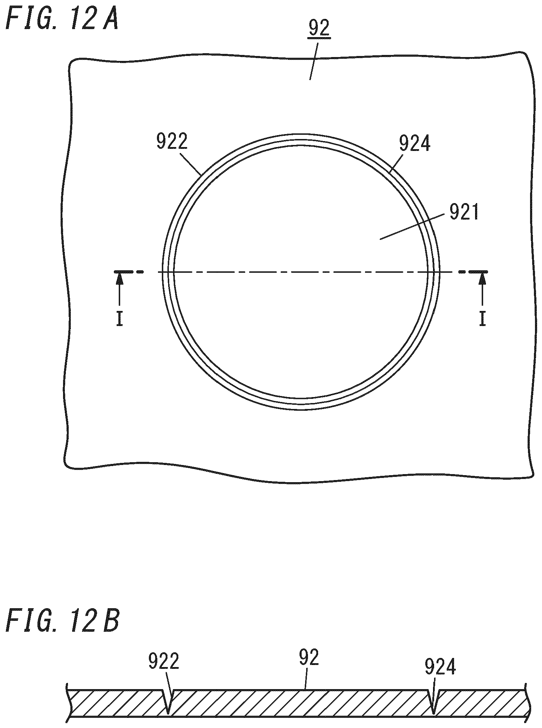

Next, an overview of a glass panel unit 10 and a method for manufacturing the glass panel unit 10 according to a third embodiment will be described with reference to FIGS. 11, 12A, and 12B. Note that the glass panel unit 10 and method for manufacturing the glass panel unit 10 according to the third embodiment are mostly the same as the glass panel unit 10 and method for manufacturing the glass panel unit 10 according to the first embodiment, and therefore, their common features will not be described all over again to avoid redundancies.

In the first embodiment, the pillars 70 are formed by performing the punching step of punching the sheet 92, which is still intact and has not been cut off yet, using the punching press.

On the other hand, according to the third embodiment, the pillars 70 are manufactured by performing a pillar forming step. The pillar forming step includes preparing a sheet 92, in which a pillar prototype, having a predetermined feature size, is formed as a part to be a pillar 70 by cutting out, using a laser beam, a peripheral portion, surrounding the part to be the pillar 70, of the sheet 92 while leaving the sheet 92 partially, and then cutting off the rest of the sheet 92 to turn the pillar prototype into the pillar 70.

Through the sheet 92, an annular groove 922 has been formed in advance to surround the entire circumference of a portion 921 having the shape of a circle in plan view as shown in FIG. 11. The annular groove 922 is formed intermittently, like so-called "perforations," by laser machining, for example. That is to say, the annular groove 922 is made up of a plurality (e.g., three) of arc-shaped grooves 923 arranged to surround the portion 921 having the circular shape in plan view. Each of these arc-shaped grooves 923 is formed to penetrate through the sheet 92 in the thickness direction (i.e., an upward/downward direction). A connecting portion 925 is left between two adj acent ones of the arc-shaped grooves 923. A means for forming each groove 923 is not limited to such laser machining. Alternatively, a different means such an etching process may also be used to form each groove 923.

**In** the sheet 92 of this embodiment, the connecting portions 925 are formed at a plurality (i.e., three) of points which are arranged at regular intervals along the circumference of the portion 921 to be located along the profile of the portion 921. Each of these connecting portions 925 performs the function of connecting together the portion 921, surrounded with the annular groove 922, of the sheet 92 and the portion, located outside of the annular groove 922, of the sheet 92. The portion 921 having the circular shape in plan view is the pillar prototype.

Also, in this embodiment, the annular groove 922 is made up of the plurality of grooves 923 penetrating through the sheet 92 in the thickness direction. However, this should not be construed as limiting. Alternatively, it is also preferable that the annular groove 922 be configured as a non-penetrating groove 924 as shown in FIGS. 12A and 12B. The non-penetrating groove 924 is formed, by performing laser machining on one surface of the sheet 92, in the shape of a continuous ring, for example. The means for forming such an annular groove 924 is not limited to the laser machining, either. Alternatively, a different means such an etching process may also be used to form such an annular groove 924.

According to the variation of the annular groove 922 shown in FIGS. 12A and 12B, bringing the punch 94 (refer to FIGS. 4A-C) downward into the portion 921 surrounded with the annular groove 922 of the sheet 92 causes a fracture to the bottom part of the annular groove 922. Then, the portion 921 surrounded with the annular groove 922 is punched out in a disk shape with the formation of the burrs reduced.

Note that, not the entire annular groove 922 has to be the non-penetrating groove. Alternatively, part of the annular groove 922 may be the non-penetrating groove 924 and the other part of the annular groove 922 may be the penetrating groove. Also, the non-penetrating grooves 924 serving as the annular groove 922 may be provided intermittently to surround the portion 921 as shown in FIG. 11.

### <Specific example>

In this embodiment, a stack of three layers of polyimide-based films (Xenomax (R) manufactured by Toyobo Co., Ltd.) having a thickness of 38 µm was used as the plurality of resin films to have an elongation equal to or greater than 35% and a tensile strength equal to or greater than 431 MPa. Note that, even acquiring the same film material and stacking the films through the same process caused inconsistency in the elongation measured. Thus, films with an elongation equal to or greater than 35% were selected out of a plurality of stacks of films manufactured under the same condition and used for this embodiment.

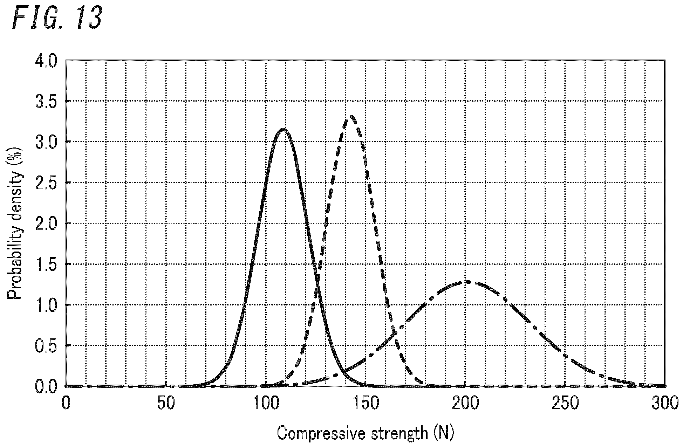

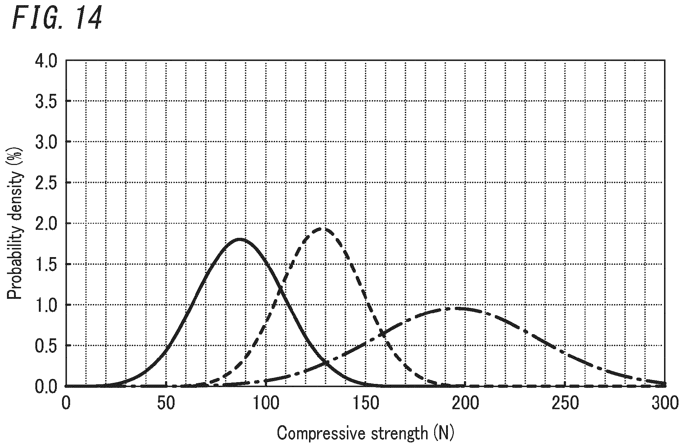

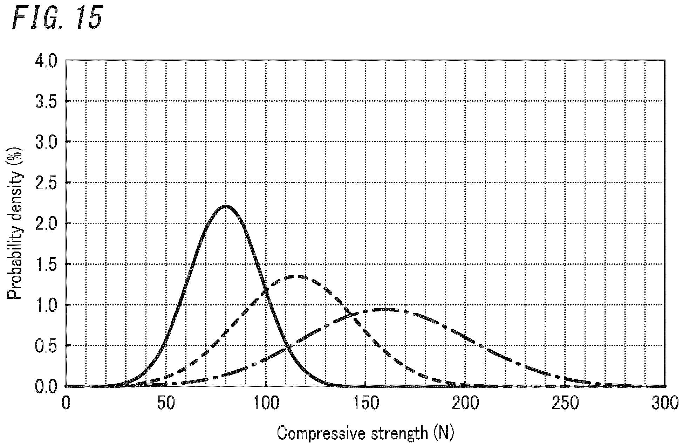

FIGS. 13-15 are graphs, each showing how a property (i.e., a compressive strength [N] in this case) of the pillars 70 varied according to the elongation and the exposure temperature of the resin films. In FIGS.13-15, the abscissa indicates the compressive strength (N), and the ordinate indicates the probability density (%). Also, in FIGS. 13-15, the results obtained when the pillars 70 were formed using the punching press to have a low elongation are indicated by the solid curve, the results obtained when pillars 70 were formed using the punching press to have a high elongation are indicated by the dashed curve, and the results obtained when the pillars 70 were formed using a laser beam to have a high elongation are indicated by the one-dot chain curve. The results shown in FIGS. 13, 14, and 15 were obtained when the pillars 70 were exposed to an environment at room temperature, when the pillars 70 were exposed to an environment at 300°C, and when the pillars 70 were exposed to an environment at 465°C, respectively.

Each of FIGS.13-15 shows that the compressive strength (N) varied depending on how the pillars 70 were formed. Specifically, the compressive strength (N) obtained when the pillars 70 were formed using a laser beam to have a high elongation was higher than the value of the compressive strength (N) obtained when the pillars 70 were formed using the punching press to have a high elongation. The compressive strength (N) obtained when the pillars 70 were formed using the punching press to have the high elongation was higher than the value of the compressive strength (N) obtained when the pillars 70 were formed using the punching press to have a low elongation. Also, the lower the exposure temperature was, the higher the compressive strength (N) turned out to be.

Next, glass panel units 10 representing Comparative Example and Specific Examples 1 to 5 were each inspected to see if the pillars 70 collapsed while the glass panel unit 10 was being manufactured.

In each of Comparative Example and Specific Examples 1 to 5, the diameter of the pillars 70 was 0.44 mm, the height of the pillars 70 was 114 µm, the pitch of the pillars 70 was 30 mm, and the dimensions of the first glass pane 20 and the second glass pane 30 were 600 mm × 600 mm. The other conditions and results are summarized in Table 1.

The pillars 70 were arranged in the same pattern in each of Comparative Example and Specific Examples 1 to 4. Only in Specific Example 5, the pitch of the pillars 70 in respective peripheral edge regions of the first glass pane 20 and the second glass pane 30 was 10 mm, which was narrower than the pitch in any other region. The other conditions of Specific Example 5 are the same as those of Specific Example 2.

Note that the wave of the tempered glass in Specific Examples 2, 3, and 5 was 6 mm with respect to the longer sides having a length of 600 mm (i.e., 6 mm/ 600 mm= 10 mm/1 m) of the glass panes. This means that the unevenness with respect to a plane, defined by connecting together both ends of the longer sides of the pair of glass panes, would have ideally been reduced to 0 mm by performing tempering process but actually had a maximum value of 6 mm.

**[Table 1]**

| | Elongation (%) | Tensile strength (MPa) | Pitch (mm) | Means for cutting | Glass | Sealant's melting point/ process temperature (°C) | Collapse of pillars |
|---|---|---|---|---|---|---|---|
| Comparative example | 27 | 412 | 30 | Punching | Non-tempered | 260/300 (260-320°C) | x |
| Specific example 1 | 35 | 431 | 30 | Punching | Non-tempered | 260/300 (260-320°C) | ○ |
| Specific example 2 | 35 | 431 | 30 | Punching | Tempered (wave: 6mm) | 260/300 (260-320°C) | Δ |
| Specific example 3 | 35 | 431 | 30 | Laser beam | Tempered (wave: 6mm) | 260/300 (260-320°C) | ⊚ |
| Specific example 4 | 35 | 431 | 30 | Laser beam | Non-tempered | 440/470 (440-475°C) | ○ |
| Specific example 5 | 35 | 431 | 30(center) | Punching | Tempered (wave: 6mm) | 260/300 (260-320°C) | ⊚ |
| | | | 10(peripheral edge) | | | | |

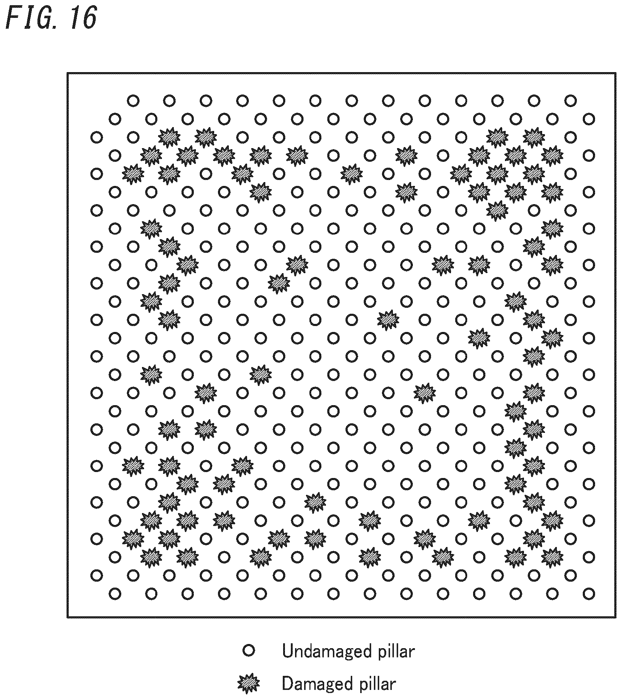

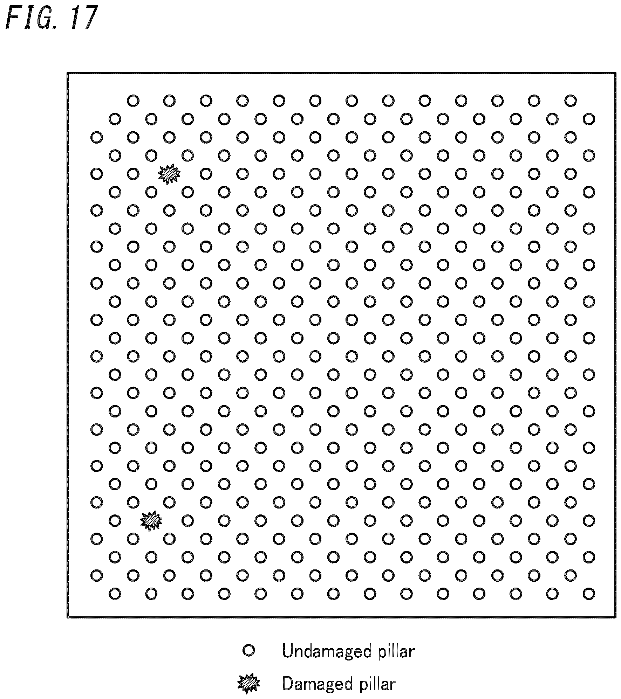

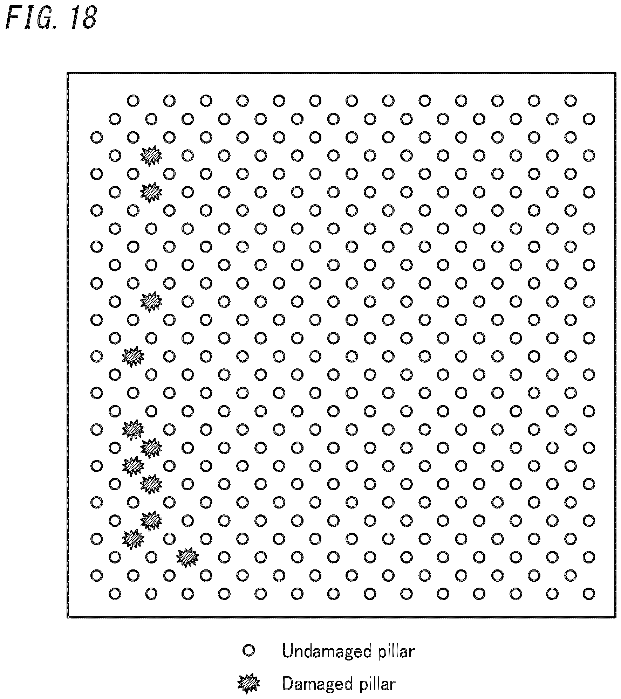

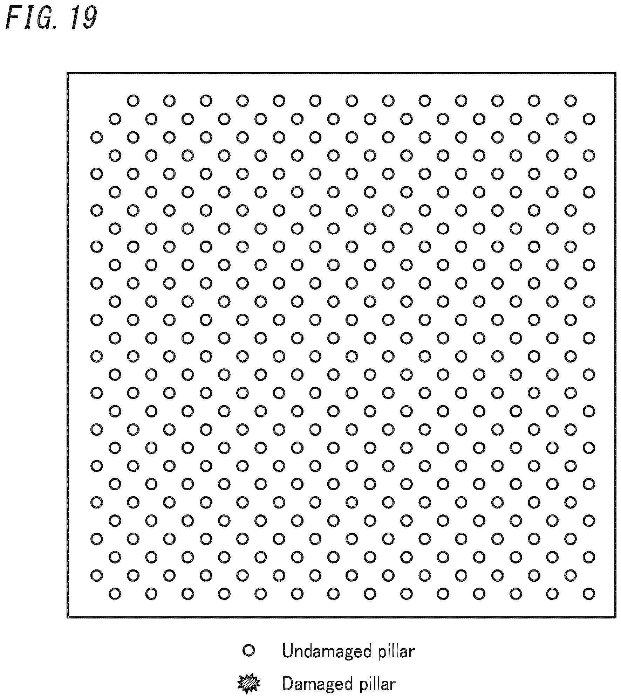

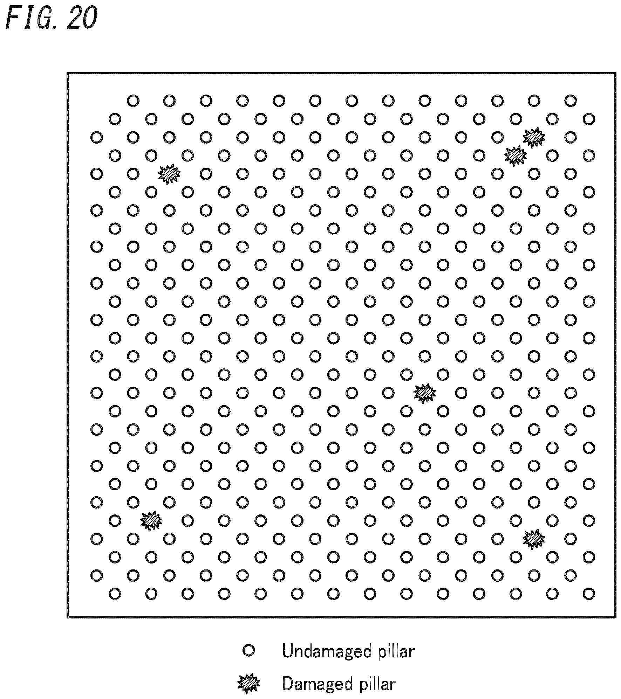

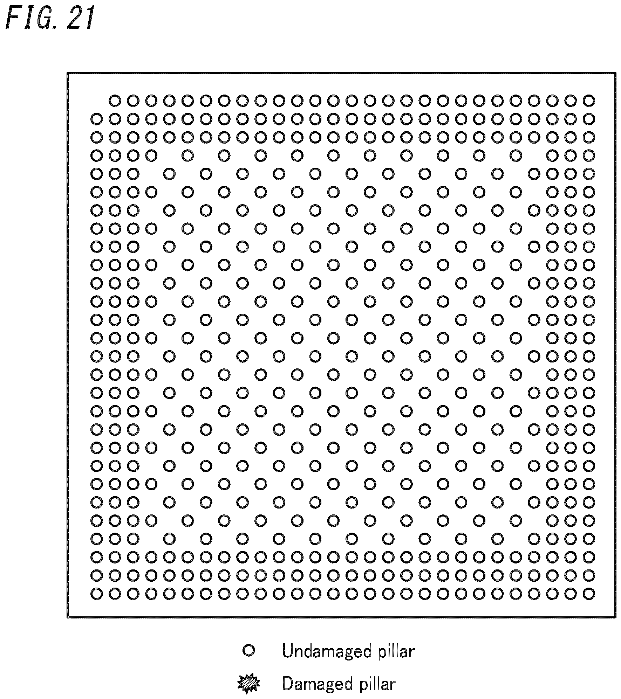

The results (indicating whether the pillars collapsed) ⊚, O, △, and × shown in this Table 1 indicate "Excellent," "Good," "Fair," and "Not Good," respectively. Also, Comparative example is shown in FIG. 16, Specific example 1 is shown in FIG. 17, Specific example 2 is shown in FIG. 18, Specific example 3 is shown in FIG. 19, Specific example 4 is shown in FIG. 20, and Specific example 5 is shown in FIG. 21.

The result obtained in Comparative example was "Not Good" and the results obtained in Specific Examples 1 to 5 were "Fair" or better.

Specific Examples 2 and 3 were different from each other in only the method for cutting out the pillars 70, which made a difference in the number of pillars collapsed. As can be seen from the results shown in Table 1, cutting the pillars 70 out of the sheet 92 using a laser beam produced better results than cutting the pillars 70 out of the sheet 92 using a punching press.

### <Sheet>

A stacked polyimide-based film was manufactured by a manufacturing method including a plasma processing step, a stacking step, and a heat treatment step. Specifically, three polyimide-based films, each having a thickness of 38 µm, were provided. Two out of the three polyimide-based films had only one surface thereof subjected to plasma processing. The other polyimide-based film had both surfaces thereof subjected to plasma processing. Next, ion exchange water, as aqueous liquid, was brought, in an environment at a temperature equal to or higher than 0°C and equal to or lower than 80°C, into contact with each of the plasma processed surfaces of the polyimide-based films. The polyimide-based film, of which both surfaces had been subjected to the plasma processing, was used as an intermediate layer. The two polyimide-based films, of which only one surface had been subjected to the plasma processing, were arranged to have the plasma processed surface of each of the two polyimide-based films brought into contact with a corresponding one of the plasma treated surfaces of the polyimide-based film used as the intermediate layer. Then, the stack of the three polyimide-based films and the aqueous liquid were heated to maximum attained temperature equal to or higher than 300°C.

In this manner, a stacked polyimide-based sheet, formed by bonding three polyimide-based films together and having a thickness of 114 µm, was manufactured.

### <Pillars cut out using laser beam>

Next, the pillars 70 formed out of the sheet 92 shown in FIG. 11 will be described. The pillars 70 were formed in the following manner. First, a pillar prototype (i.e., a portion 921 having a circular shape in plan view) was formed in the sheet 92 shown in FIG. 11 using a laser beam, and then cut and separated, using a punching press, out of the sheet 92.

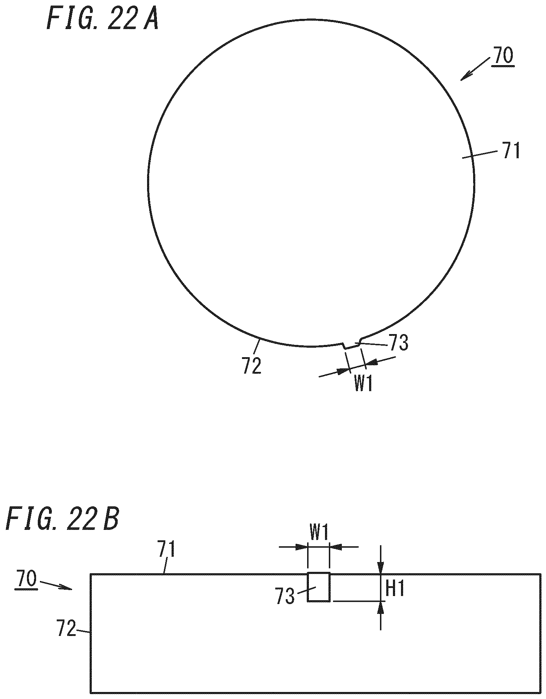

As shown in FIGS. 22A and 22B, the pillars 70 each have the shape of a column with an upper surface 71 having a circular shape, a side surface 72, and a lower surface having the same shape as the upper surface 71. Also, in the pillars 70, a part of the connecting portion 925 remains, on part of the side surface 72 thereof, as a residue (i.e., a trace) 73.

The pillars 70 had a diameter of 400-800 µm and a height of 114 µm. In this case, an experiment was carried out on the pillars 70, of which the residues 73 had various widths W1 and heights H1, to detect the detachability of the pillars 70 from the sheet 92 and the mechanical strength of the pillars 70 (hereinafter referred to as "pillar strength"). A relationship between the width W1, height H1, and side surface area of the residue 73 setting the condition of the experiment and the detachability and the pillar strength indicating the results of the experiment is summarized in the following Table 2.

In the examples shown in FIGS. 22A and 22B, the height H1 of the residue 73 was less than the height of the pillar 70. That is to say, the portion 921 was connected to the body of the sheet 92 in only a part of the side surface of the pillar 70 in the height direction.

**[Table 2]**

| Side surface area (µm²) of residue | Width W1 (µm) of residue | Height H1 (µm) of residue | Detachability | Pillar strength |
|---|---|---|---|---|
| ≤ 250 | 40 | ≤10 | Pillars dropped during laser machining (film thickness and machining varied | --- |
| 250-1000 | 25-40 | 10-25 | Detachable cleanly | High |
| 1000~2000 | 40-50 | 25-40 | | Relatively high |
| ≥2000 | 50-60 | 40-50 | Difficult to detach | Relatively low |

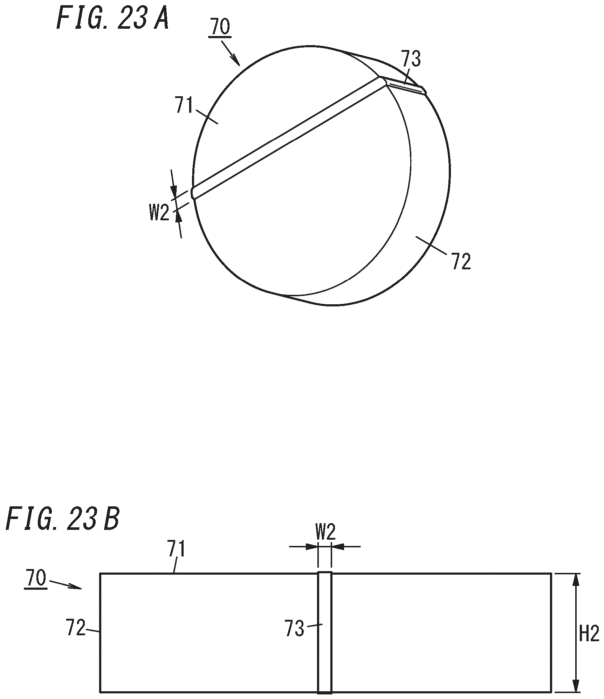

Next, separately from the experiment, of which the results are shown in Table 2, an experiment was carried out on the pillars 70 shown in FIGS. 23A and 23B to detect the detachability of the pillars 70 from the sheet 92 and their pillar strength. A relationship between the width W2, height H2, and side surface area of the residue 73 setting the condition of the experiment and the detachability and the pillar strength indicating the results of the experiment is summarized in the following Table 3.

In the example shown in FIGS. 23A and 23B, the height H2 of the residue 73 was equal to the height of the pillar 70, and the portion 921 was connected to the body of the sheet 92 over the entire length of the pillar 70 in the height direction.

**[Table 3]**

| Side surface area (µm²) of residue | Width W1 (µm) of residue | Height H1 (µm) of residue | Detachability | Pillar strength |
|---|---|---|---|---|
| ≤ 1150 | 10 | 115 | Pillars dropped during laser machining (film thickness and machining varied | --- |
| 1150-2300 | 10-20 | 115 | Detachable cleanly | High |
| 2300-3500 | 20-30 | 115 | | Relatively high |
| ≥3500 | 30-50 | 115 | Difficult to detach | Relatively low |

It is not preferable that the ratio of the side surface area of the residue 73 to the entire area of the side surface 72 of the pillars 70 be greater than 1%. This is because this makes the pillars 70 difficult to be detached from the sheet 92 and causes a decrease in pillar strength as well.

The results of the experiment shown in Table 2 reveal that when a particular condition was adopted for the residue 73, the pillars 70 could be detached cleanly and had sufficiently high mechanical strength. The particular condition adopted for the residue 73 included a width W1 of 25-50 µm, a height H1 of 10-40 µm, and a side surface area of 250-2000 µm².

Meanwhile, the results of the experiment shown in Table 3 reveal that when a particular condition was adopted for the residue 73, the pillars 70 could be detached cleanly and had sufficiently high mechanical strength. The particular condition adopted for the residue 73 included a width W2 of 10-30 µm, a height H2 of 114 µm, and a side surface area of 1150-3500 µm².

### <Difference in pillars depending on type of laser beam>

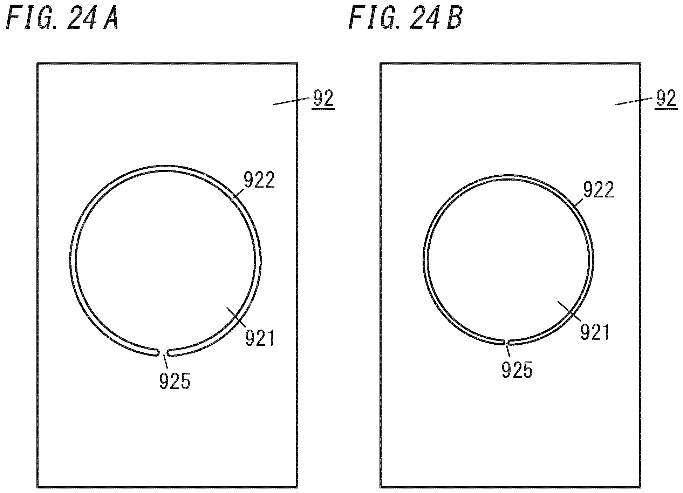

A pillar 70 around which an annular groove 922 was formed using a green laser beam is shown in FIG. 24A, and a pillar 70 around which an annular groove 922 was formed using a UV (ultraviolet) laser beam is shown in FIG. 24B. The annular groove 922 formed using a UV laser beam shown in FIG. 24B turned out to have a narrower groove width and be machinable more sharply than the annular groove 922 formed using a green laser beam shown in FIG. 24A.

### <Variations of glass panel unit>

Note that the embodiments described above are only exemplary ones of various embodiments of the present disclosure and should not be construed as limiting. Rather, the exemplary embodiments described above may be readily modified in various manners depending on a design choice or any other factor without departing from the scope of the present disclosure. Next, variations of the exemplary embodiments will be enumerated one after another. In the following description, the exemplary embodiments described above will be hereinafter referred to as a "basic example."

**In** the basic example described above, only the first glass pane 200, out of the first and second glass panes 200, 300, includes the low-emissivity film 220. **In** one variation, the second glass pane 300 may also include a low-emissivity film. That is to say, each of the first and second glass panes 200, 300 may include the low-emissivity film. Thus, each of the first and second glass panes 20, 30 may also include the low-emissivity film.

**In** the basic example described above, out of the first and second glass panes 200, 300, the first glass pane 200 includes the low-emissivity film 220 but the second glass pane 300 includes no low-emissivity films. **In** another variation, however, the second glass pane 300 may include a low-emissivity film and the first glass pane 200 may include no low-emissivity film 220. Thus, in a glass panel unit 10 according to this variation, the second glass pane 30 may include a low-emissivity film and the first glass pane 20 may include no low-emissivity film 220.

In the basic example described above, the gas exhausting step is started after the first melting step has ended. In a variation, if the temperature in the melting furnace is lower than the first softening point after the first melting time tm1 has passed, then the gas exhausting step may be started halfway through the first melting step.

In the basic example described above, the gas exhausting step ends when the second melting step ends. In a variation, the gas exhausting step may be started after the first melting step has ended and may end before the second melting step ends.

In the basic example described above, the glass panel unit 10 has a rectangular shape. Alternatively, in a variation, the glass panel unit 10 may also have a circular, polygonal, or any other desired shape. That is to say, the first glass pane 20 and the second glass pane 30 do not have to be rectangular but may also have a circular, polygonal, or any other desired shape.

The first and second glass panes 20, 30 do not have to have the same planar shape and the same planar dimensions. Also, the first glass pane 20 does not have to be as thick as the second glass pane 30, either. The same statement applies to the first and second glass panes 200, 300 as well.

The peripheral wall 410 does not have to have the same planar shape as the first and second glass panes 200, 300, either.

Optionally, the peripheral wall 410 may include other elements such as a core material.

Also, in the assembly 100, the peripheral wall 410 is just provided between the first and second glass panes 200, 300 and does not bond the first and second glass panes 200, 300 together. Alternatively, however, in the assembly 100 stage, the peripheral wall 410 may bond the first and second glass panes 200, 300 together. In short, in the assembly 100, the peripheral wall 410 only needs to be provided between the first and second glass panes 200, 300 and does not have to bond the first and second glass panes 200, 300 together.

Furthermore, in the basic example described above, the partition 420 is out of contact with the peripheral wall 410. This allows air passages 610, 620 to be formed in the respective gaps between both ends of the partition 420 and the peripheral wall 410. However, this is only an example and should not be construed as limiting. Alternatively, only one of the two ends of the partition 420 may be coupled to the peripheral wall 410. **In** that case, only one air passage 600 may be formed between the partition 420 and the peripheral wall 410. Still alternatively, the partition 420 may even have both ends thereof coupled to the peripheral wall 410. **In** that case, the air passage 600 may be a through hole provided through the partition 420. Alternatively, the air passage 600 may also be a gap between the partition 420 and the first glass pane 200. Still alternatively, the partition 420 may be made up of two or more partitions arranged at intervals. In that case, the air passage 600 may be a gap left between the two or more partitions.

In the basic example described above, the air passages 600 include the two air passages 610, 620. Alternatively, only one air passage 600 may be provided or the air passages 600 may include three or more air passages. Furthermore, the air passages 600 may have any shape without limitation.

Furthermore, in the basic example described above, the internal space 500 is partitioned into the one first space 510 and the one second space 520. However, this is only an example and should not be construed as limiting. Alternatively, the internal space 500 may also be partitioned by the partition 420 into one or more first spaces 510 and one or more second spaces 520. If the internal space 500 has two or more first spaces 510, two or more glass panel units 10 may be obtained from a single work in progress 110.

In the basic example described above, the evacuated space 50 is spatially separated from the external environment by the boundary wall 42. In another variation, however, the evacuated space 50 may be spatially separated from the external environment using a sealing portion formed by melting, and cutting off halfway through, an exhaust pipe connected to the exhaust port 700. That is to say, the boundary wall 42 does not have to be provided for the glass panel unit 10 as a member for spatially separating the evacuated space 50 from the external environment.

The pillar placing step (i.e., the third step) may include cutting a plurality of pillars 70 out of the sheet 92 in advance, and then placing, using a chip mounter, for example, the plurality of pillars 70, at predetermined points on the second glass pane 300.

The pitch of the pillars 70 may be equal to or less than 30 mm, equal to or less than 25 mm, or equal to or less than 20 mm. That is to say, the upper limit of the pitch of the pillars 70 is preferably at least equal to or greater than 20 mm and at most equal to or less than 30 mm (such as 30 mm, 25 mm, or 20 mm).

The pitch of the pillars 70 may be equal to or greater than 5 mm, equal to or greater than 10 mm, equal to or greater than 15 mm, or equal to or greater than 20 mm. That is to say, the lower limit of the pitch of the pillars 70 is preferably at least equal to or greater than 5 mm and at most equal to or less than 20 mm (such as 5 mm, 10 mm, 15 mm, or 20 mm). Particularly, it is preferable that the lower limit of the pitch of the pillars 70 be as large as possible from the viewpoint of visibility (i.e., to make the pillars 70 as unnoticeable as possible).

The sheet 92 may be formed as a stack of two to fifty layers of resin films, such as polyimide-based films, each of which has a thickness of 5-50 µm. Also, "UPILEX (R)" manufactured by UBE Corporation may also be used as each of the resin films. Alternatively, another type of resin film may also be used.

The upper limit of the process temperature is preferably at least equal to or higher than 450°C and at most equal to or lower than 480°C (such as 450°C, 460°C, 470°C, or 480°C).

The lower limit of the process temperature is preferably at least equal to or higher than 250°C and at most equal to or lower than 300°C (such as 250°C, 260°C, 270°C, 280°C, 290°C, or 300°C).

The process temperature falls within the range of any one of these upper limit temperatures to any one of these lower limit temperatures.

The lower limit of the diameter of the pillars 70 is preferably equal to or greater than 0.44 mm, considering the collapsibility of the pillars 70 when the pitch of the pillars 70 is at most about 30 mm, even though it is technically possible to form the pillars 70 to have a diameter of as small as about 0.1 mm if the pitch of the pillars 70 is decreased.

The upper limit of the diameter of the pillars 70 is preferably at most equal to or less than 0.8 mm (such as 0.5 mm, 0.6 mm, 0.7 mm, and 0.8 mm). Considering the risk of collapse of the pillars 70, a diameter of 10 mm is acceptable. However, the larger the diameter of the pillars 70 is, the more visible the pillars 70 will be or the lower the thermal insulation properties will be.

The upper limit of the thickness of the pillars 70 may be greater than 100 µm. It is preferable, for example, that the thickness of the pillars 70 be at least equal to or greater than 100 µm and at most equal to or less than 300 µm (such as 200 µm and 300 µm).

The lower limit of the thickness of the pillars 70 is preferably at least equal to or greater than 10 µm and at most equal to or less than 200 µm (such as 100 µm and 200 µm). Naturally, the lower limit of the thickness of the pillars 70 is smaller than the upper limit of the thickness of the pillars 70.

In the first embodiment, the sheet 92, having a thickness of 114 µm and formed as a stack of three layers of the polyimide-based films, each of which has a thickness of 38 µm, is used and the pillars 70 are formed out of the sheet 92 using the punching press. However, this should not be construed as limiting. Alternatively, a sheet 92, formed by stacking the polyimide-based film to have a thickness equal to or greater than 230 µm and equal to or less than 250 µm (e.g., 230 µm), may also be used. In that case, the pillars 70 are preferably formed out of the sheet 92 by cutting the pillars 70 out of the sheet 92 using a laser beam, not the punching press. This is because using a laser beam allows the pillars 70 to be more easily cut out of the thick sheet 92, rather than using the punching press.

The thicker the pillars 70 are, the wider the gap between the first glass pane 20 and the second glass pane 30 will be. Thus, the thermal insulation performance of the glass panel unit 10 improves, accordingly.

### (Recapitulation)

As can be seen from the foregoing description of embodiments and their variations, a method for manufacturing a glass panel unit (10) according to a first aspect includes a sealant placing step, a pillar placing step, a counter arrangement step, a bonding step, an evacuating step, and a sealing step. The sealant placing step is the step of placing a sealant on either a first glass pane (20) or a second glass pane (30). The pillar placing step is the step of placing a plurality of pillars (70) on either the first glass pane (20) or the second glass pane (30) at a pitch equal to or less than 30 mm. The plurality of pillars (70) have been cut out of a sheet. The sheet is a stack of a plurality of resin films and has an elongation equal to or greater than 35% and a tensile strength equal to or greater than 431 MPa. The counter arrangement step is the step of arranging the first glass pane (20) and the second glass pane (30) to make the first glass pane (20) and the second glass pane (30) face each other. The bonding step is the step of melting the sealant at a process temperature equal to or higher than 260°C and equal to or lower than 475°C to create an internal space (500) surrounded with the first glass pane (20), the second glass pane (30), and the sealant. The evacuating step is the step of exhausting a gas from the internal space (500) to evacuate the internal space (500). The sealing step is the step of sealing the internal space (500) while maintaining an evacuated state to form a hermetically sealed evacuated space (50).

The first aspect allows for manufacturing a glass panel unit (10) including pillars (70) that are less easily collapsable.

A method for manufacturing a glass panel unit (10) according to a second aspect may be implemented in combination with the first aspect. In the second aspect, the plurality of pillars (70) are manufactured by performing a punching step. The punching step includes punching the sheet using a punching press.

The second aspect allows for easily forming the pillars (70) by cutting off the sheet (92).

A method for manufacturing a glass panel unit (10) according to a third aspect may be implemented in combination with the first aspect. **In** the third aspect, the plurality of pillars (70) are manufactured by performing a laser cutting step. The laser cutting step includes cutting off the sheet using a laser beam.

The third aspect makes it easier to make the feature sizes of the pillars (70) uniform and also reduces the chances of causing a decrease in the mechanical strength of the pillars (70).

A method for manufacturing a glass panel unit (10) according to a fourth aspect may be implemented in combination with the first aspect. **In** the fourth aspect, the plurality of pillars (70) are manufactured by performing a pillar forming step. The pillar forming step includes: preparing the sheet, in which a pillar prototype, having a predetermined feature size, is formed as a part to be each of the plurality of pillars (70) by cutting out, using a laser beam, a peripheral portion, surrounding the part to be the pillar, of the sheet while leaving the sheet partially; and then cutting off a remaining part of the sheet to turn the pillar prototype into the pillar (70).

The fourth aspect allows for easily forming the pillars (70) by cutting off the sheet (92).

A method for manufacturing a glass panel unit (10) according to a fifth aspect may be implemented in combination with the third or fourth aspect. **In** the fifth aspect, the first glass pane (20) and the second glass pane (30) are made of tempered glass.

According to the fifth aspect, the tempered glass is more likely to have wave, thus often making the gap between the first glass pane (20) and the second glass pane (30) narrower in some parts than in other parts. The glass panel unit (10) made of such tempered glass achieves a significant advantage of making the pillars (70) much less easily collapsable. Note that the wave of the tempered glass should be equal to or less than 10 mm/m. More preferably, the wave of the tempered glass is equal to or less than 6 mm/m.

An assembly (100) of a glass panel unit (10) according to a sixth aspect includes a first glass pane (20), a second glass pane (30), a sealant, and a plurality of pillars (70). The plurality of pillars (70) that formed part of a sheet (92) are placed on either the first glass pane (20) or the second glass pane (30) at a pitch equal to or less than 30 mm. The sheet (92) is a stack of a plurality of resin films and has an elongation equal to or greater than 35% and a tensile strength equal to or greater than 431 MPa. The sealant, having a softening point equal to or higher than 260°C and equal to or lower than 475°C, is interposed in a frame shape between the first glass pane (20) and the second glass pane (30). The first glass pane (20) and the second glass pane (30) are stacked via the sealant.

The sixth aspect allows for manufacturing an assembly (100) including pillars (70) that are less easily collapsable.

A glass panel unit (10) according to a seventh aspect includes a first glass pane (20), a second glass pane (30), a peripheral wall (41), and a plurality of pillars (70). The plurality of pillars (70) that formed part of a sheet (92) are placed on either the first glass pane (20) or the second glass pane (30) at a pitch equal to or less than 30 mm. The sheet (92) is a stack of a plurality of resin films and has an elongation equal to or greater than 35% and a tensile strength equal to or greater than 431 MPa. The peripheral wall (41) is provided in a frame shape between the first glass pane (20) and the second glass pane (30). The peripheral wall (41) contains, as a main component, glass having a softening point equal to or higher than 260°C and equal to or lower than 475°C and has air gaps inside. The peripheral wall (41) is bonded to each of the first glass pane (20) and the second glass pane (30).

The seventh aspect allows for manufacturing a glass panel unit (10) including pillars (70) that are less easily collapsable.

### Reference Signs List

- 10: Glass Panel Unit
- 100: Assembly
- 20: First Glass Pane
- 30: Second Glass Pane
- 50: Evacuated Space
- 500: Internal Space
- 70: Pillar

## Claims

1. A method for manufacturing a glass panel unit, the method comprising:
a sealant placing step including placing a sealant on either a first glass pane or a second glass pane;
a pillar placing step including placing a plurality of pillars on either the first glass pane or the second glass pane at a pitch equal to or less than 30 mm, the plurality of pillars having been cut out of a sheet, the sheet being a stack of a plurality of resin films and having an elongation equal to or greater than 35% and a tensile strength equal to or greater than 431 MPa;
a counter arrangement step including arranging the first glass pane and the second glass pane to make the first glass pane and the second glass pane face each other;
a bonding step including melting the sealant at a process temperature equal to or higher than 260°C and equal to or lower than 475°C to create an internal space surrounded with the first glass pane, the second glass pane, and the sealant;
an evacuating step including exhausting a gas from the internal space to evacuate the internal space; and
a sealing step including sealing the internal space while maintaining an evacuated state to form a hermetically sealed evacuated space.

2. The method of claim 1, wherein
the plurality of pillars are manufactured by performing a punching step, the punching step including punching the sheet using a punching press.

3. The method of claim 1, wherein
the plurality of pillars are manufactured by performing a laser cutting step, the laser cutting step including cutting off the sheet using a laser beam.

4. The method of claim 1, wherein
the plurality of pillars are manufactured by performing a pillar forming step, the pillar forming step including: preparing the sheet, in which a pillar prototype, having a predetermined feature size, is formed as a part to be each of the plurality of pillars by cutting out, using a laser beam, a peripheral portion, surrounding the part to be the pillar, of the sheet while leaving the sheet partially; and then cutting off a remaining part of the sheet to turn the pillar prototype into the pillar.

5. The method of claim 3 or 4, wherein
the first glass pane and the second glass pane are made of tempered glass.

6. A glass panel unit assembly comprising:
a first glass pane;
a second glass pane;
a sealant; and
a plurality of pillars,
the plurality of pillars that formed part of a sheet being placed on either the first glass pane or the second glass pane at a pitch equal to or less than 30 mm, the sheet being a stack of a plurality of resin films and having an elongation equal to or greater than 35% and a tensile strength equal to or greater than 431 MPa,
the sealant, having a softening point equal to or higher than 260°C and equal to or lower than 475°C, being interposed in a frame shape between the first glass pane and the second glass pane, and
the first glass pane and the second glass pane being stacked via the sealant.

7. A glass panel unit comprising:
a first glass pane;
a second glass pane;
a peripheral wall; and
a plurality of pillars,
the plurality of pillars that formed part of a sheet being placed on either the first glass pane or the second glass pane at a pitch equal to or less than 30 mm, the sheet being a stack of a plurality of resin films and having an elongation equal to or greater than 35% and a tensile strength equal to or greater than 431 MPa,
the peripheral wall being provided in a frame shape between the first glass pane and the second glass pane, the peripheral wall containing, as a main component, glass having a softening point equal to or higher than 260°C and equal to or lower than 475°C, the peripheral wall having air gaps inside, and
the peripheral wall being bonded to each of the first glass pane and the second glass pane.
